(19) **Europäisches Patentamt / European Patent Office / Office européen des brevets**

(11) **EP 4 295 941 B1**

(12) **EUROPEAN PATENT SPECIFICATION**

(45) Date of publication and mention
of the grant of the patent:
**10.07.2024   Bulletin 2024/28**

(21) Application number: **23179206.0**

(22) Date of filing: **14.06.2023**

(51) International Patent Classification (IPC):
**B01D 53/94** (2006.01)        **B01J 23/00** (2006.01)
**B01J 23/63** (2006.01)        **B01J 35/00** (2024.01)
**B01J 35/61** (2024.01)        **F01N 3/10** (2006.01)
**B01J 37/02** (2006.01)        **F01N 13/00** (2010.01)

(52) Cooperative Patent Classification (CPC):
**B01D 53/945; B01J 23/002; B01J 23/63;
B01J 35/19; B01J 35/612; B01J 35/613;
B01J 37/0215; B01J 37/0244; B01J 37/0248;
F01N 3/035; F01N 3/0814; F01N 3/0842;
F01N 3/103; F01N 3/106; F01N 3/2066;**        (Cont.)

(54) **EXHAUST GAS PURIFICATION CATALYST**

ABGASREINIGUNGSKATALYSATOR

CATALYSEUR DE PURIFICATION DE GAZ D'ÉCHAPPEMENT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **20.06.2022   JP 2022099117**

(43) Date of publication of application:
**27.12.2023   Bulletin 2023/52**

(73) Proprietors:
• **TOYOTA JIDOSHA KABUSHIKI KAISHA
Toyota-shi
Aichi 471-8571 (JP)**
• **CATALER CORPORATION
Kakegawa-shi, Shizuoka 437-1492 (JP)**

(72) Inventors:
• **NISHIO, Takahiro
Toyota-shi, 471-8571 (JP)**
• **SHIRAKAWA, Shogo
Toyota-shi, 471-8571 (JP)**
• **TOJO, Takumi
Toyota-shi, 471-8571 (JP)**

• **TAKAGI, Nobuyuki
Toyota-shi, 471-8571 (JP)**
• **TODA, Yosuke
Kakegawa-shi, 437-1492 (JP)**
• **HOSHINO, Sho
Kakegawa-shi, 437-1492 (JP)**
• **SAKAMOTO, Shun
Kakegawa-shi, 437-1492 (JP)**

(74) Representative: **J A Kemp LLP
80 Turnmill Street
London EC1M 5QU (GB)**

(56) References cited:
**US-A1- 2012 021 899        US-A1- 2015 252 744
US-A1- 2016 279 613**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
**F01N 13/009;** B01D 2255/1023; B01D 2255/1025;
B01D 2255/407; B01D 2255/9022;
B01D 2255/9032; B01D 2255/908;
B01D 2255/9207; B01D 2258/014; F01N 2340/02;
F01N 2610/02; Y02T 10/12

**Description**

BACKGROUND

Technical Field

The present disclosure relates to an exhaust gas purification catalyst.

Description of Related Art

An exhaust gas discharged from an internal combustion engine for an automobile and the like, for example, an internal combustion engine, such as a gasoline engine or a diesel engine, contains harmful components, such as carbon monoxide (CO), hydrocarbon (HC), and nitrogen oxide (NOx).

Therefore, the internal combustion engine generally includes an exhaust gas purification device to decompose and remove these harmful components, and the harmful components are made almost detoxified by an exhaust gas purification catalyst disposed in the exhaust gas purification device.

For example, JP 2016-175053 A discloses an exhaust gas purification catalyst that includes a substrate with a cell structure through which an exhaust gas flows, and a catalyst layer formed on a cell wall surface of the substrate. The catalyst layer includes a lower catalyst layer formed on a surface of the substrate and an upper catalyst layer formed on a surface of the lower catalyst layer. The upper catalyst layer includes at least a zirconia support with rhodium carried thereon, and two types of ceria-zirconia-based composite oxides with different specific surface areas, each of the ceria-zirconia-based composite oxides having no rhodium carried thereon. The lower catalyst layer includes an alumina support with platinum carried thereon, and a ceria-zirconia-based composite oxide.

JP 2022-007587 A discloses an exhaust gas purification catalyst that is disposed on an exhaust passage of an internal combustion engine and purifies exhaust gas discharged from the internal combustion engine. The exhaust gas purification catalyst includes a substrate and a catalyst coating layer formed on a surface of the substrate. The catalyst coating layer includes an OSC material having an oxygen storage capacity. The catalyst coating layer includes a Rh layer in which Rh is mainly arranged as a catalyst metal and a Pd/Pt layer in which Pd and/or Pt is mainly arranged as a catalyst metal. At least a part of the Pd/Pt layer in the catalyst coating layer includes a low specific surface area OSC material having a specific surface area of 40 $m^2$/g or more and 60 $m^2$/g or less, made of a ceria-zirconia-based composite oxide as the OSC material.

Another exhaust gas purification catalyst using OSC materials with two different specific surface areas is disclosed in US 2012/021899 A1.

SUMMARY

The exhaust gas purification catalysts in JP 2016-175053 A and JP 2022-007587 A have a structure in which the catalyst coating layer is applied on the substrate. The catalyst coating layer includes a precious metal as a catalyst metal.

An amount of precious metal used for an exhaust gas purification catalyst is required to be reduced from an aspect of resource risk. In order to reduce the amount of the precious metal, it is necessary to suppress a decrease in catalytic activity of the precious metal caused by the use of the exhaust gas purification catalyst. In order to suppress the decrease in catalytic activity of the precious metal, for example, it is possible to suppress poisoning of the precious metal by HC in an exhaust gas (HC poisoning), which is one of the causes of decreased catalytic activity of the precious metal.

Meanwhile, the catalyst coating layer optionally includes a material having an oxygen storage capacity (OSC) (OSC material) besides the catalyst metal. The OSC material is a material that can absorb and release oxygen. The OSC material allows keeping an oxygen concentration constant to maintain a purification performance (catalyst performance) of the exhaust gas purification catalyst even when an air-fuel ratio varies.

That is, as an exhaust gas purification catalyst, an exhaust gas purification catalyst having a catalyst performance, that is, suppressing HC poisoning of a precious metal, and an OSC performance in a compatible manner is desired.

Accordingly, the present disclosure provides an exhaust gas purification catalyst having a catalyst performance and an OSC performance in a compatible manner (balancing the catalyst performance and the OSC performance) in an air-fuel ratio (A/F) rich atmosphere where HC poisoning is likely to occur.

Conversion of NOx in catalytic activity is done particularly by rhodium (Rh) among precious metals. However, the catalytic activity of Rh is easily decreased by an effect of HC poisoning, and, in particular, for example, under an A/F rich atmosphere where a low oxygen concentration state continues, a surface of Rh possibly be covered by HC, and therefore, the catalytic activity of Rh is more likely to be decreased. Accordingly, to suppress the decrease in catalytic activity, suppressing HC poisoning of Rh is effective.

Meanwhile, the OSC material possibly causes a delay in state change of precious metals and a decrease in catalytic activity by its OSC performance. For example, an OSC material having a large specific surface area has a high OSC performance but is easily covered with HC in the exhaust gas, therefore possibly causing the decrease in catalytic activity of precious metals and a decrease in OSC performance. In contrast to this, for example, an OSC material having a small specific surface area can suppress the decrease in catalytic activity of precious metals because it is less likely to be covered with HC in the exhaust gas, but such OSC material has a limitation in OSC performance. Accordingly, selection of an appropriate OSC material is required to ensure an appropriate OSC performance.

Therefore, as a result of inventive studies, the inventors have found the following. In an exhaust gas purification catalyst including a substrate and a catalyst coating layer coated on the substrate, as a catalyst coating layer, a first catalyst coating layer including Pd and/or Pt, which is a precious metal as a catalyst metal, and a second catalyst coating layer including Rh, which is a precious metal as a catalyst metal, are disposed. The first catalyst coating layer is formed from an end portion in an upstream side with respect to an exhaust gas flow direction in the exhaust gas purification catalyst. In the second catalyst coating layer, three kinds of OSC materials having different specific surface areas are disposed. As the result, it is possible to efficiently convert NOx by Rh under an oxygen atmosphere adjusted by the three kinds of OSC materials in the second catalyst coating layer while converting HC by Pd and/or Pt in the first catalyst coating layer. Thus, the inventors achieved the present disclosure.

That is, the outline of the present disclosure is as follows.

(1) An exhaust gas purification catalyst comprising:

a substrate; and

a catalyst coating layer coated on the substrate,

wherein the catalyst coating layer includes a first catalyst coating layer containing Pd and/or Pt as a catalyst metal and a second catalyst coating layer containing Rh as a catalyst metal,

wherein the first catalyst coating layer is formed from an end portion in an upstream side with respect to an exhaust gas flow direction in the exhaust gas purification catalyst, and

wherein the second catalyst coating layer includes a high specific surface area OSC material having a specific surface area of more than 40 $m^2/g$, a medium specific surface area OSC material having a specific surface area of 4 $m^2/g$ to 40 $m^2/g$, and a low specific surface area OSC material having a specific surface area of less than 4 $m^2/g$.

(2) The exhaust gas purification catalyst according to (1),
wherein each of the high specific surface area OSC material and the medium specific surface area OSC material independently contains an alumina ($Al_2O_3$)-ceria ($CeO_2$)-zirconia ($ZrO_2$)-based composite oxide (ACZ) or a ceria-zirconia-based composite oxide (CZ), and the low specific surface area OSC material contains a ceria-zirconia-based composite oxide.

(3) The exhaust gas purification catalyst according to (2),
wherein the low specific surface area OSC material contains a ceria-zirconia-based composite oxide having a pyrochlore structure.

(4) The exhaust gas purification catalyst according any one of (1) to (3),
wherein the second catalyst coating layer has an upstream coating layer formed from the end portion in the upstream side with respect to the exhaust gas flow direction in the exhaust gas purification catalyst and a downstream coating layer formed from an end portion in a downstream side with respect to the exhaust gas flow direction in the exhaust gas purification catalyst.

(5) The exhaust gas purification catalyst according to (4),
wherein the first catalyst coating layer has a width of 20% to 50% of a whole length of the substrate in the exhaust gas purification catalyst, the upstream coating layer has a width of 30% to 70% of the whole length of the substrate in the exhaust gas purification catalyst, and the downstream coating layer has a width of 30% to 70% of the whole length of the substrate in the exhaust gas purification catalyst.

(6) The exhaust gas purification catalyst according to (4) or (5),
wherein the first catalyst coating layer is disposed on the upstream coating layer.

(7) The exhaust gas purification catalyst according to (4) or (5),
wherein the first catalyst coating layer is disposed under the upstream coating layer.

(8) The exhaust gas purification catalyst according to any one of (4) to (7),
wherein the upstream coating layer includes the high specific surface area OSC material and the low specific surface area OSC material, and the downstream coating layer includes the medium specific surface area OSC material and the low specific surface area OSC material.

(9) The exhaust gas purification catalyst according to (8),

wherein the high specific surface area OSC material has ceria in an amount of 10 weight% (% by weight) to 40 weight% with respect to a total weight of ceria in the upstream coating layer and the downstream coating layer as the second catalyst coating layer,

wherein the medium specific surface area OSC material has ceria in an amount of 10 weight% to 40 weight% with respect to the total weight of ceria in the upstream coating layer and the downstream coating layer as the second catalyst coating layer,

wherein the high specific surface area OSC material and the medium specific surface area OSC material have ceria in an amount of 60 weight% or less with respect to the total weight of ceria in the upstream coating layer and the downstream coating layer as the second catalyst coating layer,

wherein the low specific surface area OSC material has ceria in an amount of 40 weight% to 80 weight% with respect to the total weight of ceria in the upstream coating layer and the downstream coating layer as the second catalyst coating layer, and

wherein, a sum of all the amounts of ceria in the high specific surface area OSC material, the medium specific surface area OSC material, and the low specific surface area OSC material becomes 100 weight%.

(10) The exhaust gas purification catalyst according to any one of (4) to (9),
wherein the first catalyst coating layer includes Pd as a catalyst metal.

(11) The exhaust gas purification catalyst according to any one of (4) to (10),
wherein the exhaust gas purification catalyst is for use as S/C in a two-catalyst system.

(12) The exhaust gas purification catalyst according to any one of (1) to (3),
wherein the second catalyst coating layer is formed from an end portion in a downstream side with respect to the exhaust gas flow direction in the exhaust gas purification catalyst.

(13) The exhaust gas purification catalyst according to (12),
wherein the first catalyst coating layer has a width of 15% to 50% of a whole length of the substrate in the exhaust gas purification catalyst, and the second catalyst coating layer has a width of 65% to 95% of the whole length of the substrate in the exhaust gas purification catalyst.

(14) The exhaust gas purification catalyst according to (12) or (13),
wherein the first catalyst coating layer contains Pt as a catalyst metal.

(15) The exhaust gas purification catalyst according to any one of (12) to (14),
wherein the exhaust gas purification catalyst is for use as UF/C in a two-catalyst system.

The present disclosure provides an exhaust gas purification catalyst having a catalyst performance and an OSC performance in a compatible manner in an air-fuel ratio (A/F) rich atmosphere where HC poisoning is likely to occur.

BRIEF DESCRIPTION OF THE DRAWINGS

FIG. 1 is a drawing schematically illustrating an example of a first embodiment according to the present disclosure;
FIG. 2 is a drawing schematically illustrating an example of the first embodiment according to the present disclosure;
FIG. 3 is a drawing schematically illustrating an example of the first embodiment according to the present disclosure;
FIG. 4 is a drawing schematically illustrating an example of the first embodiment according to the present disclosure;
FIG. 5 is a drawing schematically illustrating an example of the first embodiment according to the present disclosure;
FIG. 6 is a drawing schematically illustrating an example of the first embodiment according to the present disclosure;
FIG. 7 is a drawing schematically illustrating an example of a second embodiment according to the present disclosure;
FIG. 8 is a drawing schematically illustrating an example of the second embodiment according to the present disclosure;
FIG. 9 is a graph showing NOx conversion rates in a rich atmosphere and OSC performances at a low temperature and a high temperature for exhaust gas purification catalysts in Comparative Example 1 and Example 2;
FIG. 10 is a graph showing NOx conversion rates in a rich atmosphere and OSC performances at a low temperature and a high temperature for exhaust gas purification catalysts in Comparative Example 3 and Example 5;
FIG. 11 is a graph showing a relation between a ceria proportion occupied by a high specific surface area OSC material, and a NOx conversion rate in a rich atmosphere and an OSC performance in a second catalyst coating layer;
FIG. 12 is a graph showing NOx conversion rates in a rich atmosphere and OSC performances for exhaust gas purification catalysts in Comparative Examples 4 and 5 and Example 9; and
FIG. 13 is a graph showing NOx conversion rates in a rich atmosphere for exhaust gas purification catalysts in Comparative Examples 4 and 6 and Examples 8 and 10.

DETAILED DESCRIPTION OF THE EMBODIMENTS

The following describes some embodiments of the present disclosure in detail. In the description, features of the present disclosure will be described with reference to the drawings as necessary. In the drawings, dimensions and shapes of respective components are exaggerated for clarification, and actual dimensions and shapes are not accurately illustrated. Accordingly, the technical scope of the present disclosure is not limited to the dimensions or the shapes of respective components illustrated in the drawings. Note that, an exhaust gas purification catalyst of the present disclosure is not limited to the embodiments below, and can be performed in various configurations where changes, improvements, and the like which a person skilled in the art can make are given without departing from the gist of the present disclosure.
The present disclosure relates to an exhaust gas purification catalyst that includes a substrate and a catalyst coating layer coated on the substrate. The catalyst coating layer has a first catalyst coating layer including Pd and/or Pt as a catalyst metal and a second catalyst coating layer including Rh as a catalyst metal. The first catalyst coating layer is formed from an end portion in an upstream side with respect to an exhaust gas flow direction in the exhaust gas purification catalyst. The second catalyst coating layer includes three kinds of OSC materials having different specific surface areas.

(Substrate)

For the substrate, a known substrate having a honeycomb shape can be used, specifically, a monolith substrate having a honeycomb shape (for example, a honeycomb filter and a high-density honeycomb) and the like are employed in some embodiments. The material of such a substrate is not specifically limited, and a substrate made of ceramic, such as cordierite, silicon carbide (SiC), silica (SiO$_2$), alumina (Al$_2$O$_3$), and mullite, and a substrate made of metal, such as stainless-steel including chromium and aluminum are employed in some embodiments. Among these, the cordierite is used in some embodiments from the aspect of cost.

(Catalyst Coating Layer)

The catalyst coating layer at least has a first catalyst coating layer including Pd and/or Pt as a catalyst metal and a second catalyst coating layer including Rh as a catalyst metal.
The first catalyst coating layer is formed from an end portion (end surface) in an upstream side (a side to which an exhaust gas inflows) with respect to an exhaust gas flow direction in the exhaust gas purification catalyst.
The first catalyst coating layer having the above-described configuration enables to efficiently convert the exhaust gas, in particular, HC in the exhaust gas that inflows.

First Embodiment

In the first embodiment of the present disclosure, the second catalyst coating layer has an upstream coating layer formed from the end portion in the upstream side with respect to the exhaust gas flow direction in the exhaust gas purification catalyst and a downstream coating layer formed from an end portion (end surface) in a downstream side (a side from which the exhaust gas outflows) with respect to the exhaust gas flow direction in the exhaust gas purification catalyst.

In the first embodiment of the present disclosure, the first catalyst coating layer has a width of usually 20% to 50%, 20% to 35% in some embodiments, of a whole length of the substrate in the exhaust gas purification catalyst.

In the first embodiment of the present disclosure, the width of the first catalyst coating layer within the range enables to improve a contact frequency of Pd and/or Pt with a harmful component in the exhaust gas, such as HC while suppressing an aggregation between the catalyst metals caused by an excessively short width, for example, an aggregation of Pd and/or Pt caused by a densification of Pd and/or Pt, and thus enabling an improved exhaust gas purification performance.

In the first embodiment of the present disclosure, the upstream coating layer has a width of usually 30% to 70%, 30% to 60% in some embodiments, of the whole length of the substrate in the exhaust gas purification catalyst.

In the first embodiment of the present disclosure, the downstream coating layer has a width of usually 30% to 70%, 50% to 70% in some embodiments, of the whole length of the substrate in the exhaust gas purification catalyst.

In the first embodiment of the present disclosure, the widths of the upstream coating layer and the downstream coating layer within the ranges enable to improve a contact frequency of Rh with a harmful component in the exhaust gas, such as NOx while suppressing an aggregation between the catalyst metals caused by an excessively short width, for example, an aggregation of Rh caused by a densification of Rh, and thus enabling an improved exhaust gas purification performance.

In the first embodiment of the present disclosure, the first catalyst coating layer may be disposed on the upstream coating layer.

In the first embodiment of the present disclosure, disposing the first catalyst coating layer on the upstream coating layer enables to convert a harmful component, in particular, NOx, by Rh contained in the upstream coating layer after converting a harmful component in the exhaust gas that inflows, in particular, HC, by Pd and/or Pt contained in the first catalyst coating layer.

In the first embodiment of the present disclosure, the first catalyst coating layer may be disposed under the upstream coating layer.

In the first embodiment of the present disclosure, disposing the first catalyst coating layer under the upstream coating layer enables to convert NOx by Rh while avoiding oxidation of ammonia ($NH_3$) to nitrous oxide ($N_2O$) by Pd and/or Pt, for example, during warm-up operation.

In the first embodiment of the present disclosure, the first catalyst coating layer and the upstream coating layer may each have the same width or different widths. In the first embodiment of the present disclosure, when the widths of the first catalyst coating layer and the upstream coating layer are different from one another, the width of the first catalyst coating layer may be longer. In the first embodiment of the present disclosure, when the widths of the first catalyst coating layer and the upstream coating layer are different from one another, the width of the upstream coating layer may be longer.

In the first embodiment of the present disclosure, when the widths of the first catalyst coating layer and the upstream coating layer are different from one another, the width of the upstream coating layer is longer in some embodiments.

The width of the upstream coating layer longer than the width of the first catalyst coating layer enables to enhance the activity of Rh compared with the activities of Pd and Pt, realizing more effective use of Rh.

In the first embodiment of the present disclosure, the first catalyst coating layer and the downstream coating layer may form a single layer together on the whole substrate. In the first embodiment of the present disclosure, the first catalyst coating layer may overlap with the downstream coating layer. In the first embodiment of the present disclosure, when the first catalyst coating layer overlaps with the downstream coating layer, in the overlapping portion, the first catalyst coating layer may be disposed on the downstream coating layer. In the first embodiment of the present disclosure, when the first catalyst coating layer overlaps with the downstream coating layer, in the overlapping portion, the first catalyst coating layer may be disposed under the downstream coating layer. In the first embodiment of the present disclosure, when the first catalyst coating layer overlaps with the downstream coating layer, in the overlapping portion, the mutually overlapping region of the first catalyst coating layer and the downstream coating layer has a lap width of usually 5% to 30% of the whole length of the substrate in the exhaust gas purification catalyst.

In the first embodiment of the present disclosure, the first catalyst coating layer does not overlap with the downstream coating layer in some embodiments.

The first catalyst coating layer without overlapping with the downstream coating layer enables to avoid alloying of Pd and/or Pt in the first catalyst coating layer and Rh in the downstream coating layer.

In the first embodiment of the present disclosure, the upstream coating layer and the downstream coating layer may form a single layer together on the whole substrate.

In the first embodiment of the present disclosure, the upstream coating layer may overlap with the downstream coating layer. In the first embodiment of the present disclosure, when the upstream coating layer overlaps with the downstream coating layer, in the overlapping portion, the upstream coating layer may be disposed on the downstream coating layer. In the first embodiment of the present disclosure, when the upstream coating layer overlaps with the downstream coating layer, in the overlapping portion, the upstream coating layer may be disposed under the downstream coating layer. In the first embodiment of the present disclosure, when the upstream coating layer overlaps with the downstream coating layer, in the overlapping portion, the mutually overlapping region of the upstream coating layer and the downstream coating layer has a lap width of usually 5% to 30% of the whole length of the substrate in the exhaust gas purification catalyst.

In the first embodiment of the present disclosure, when the upstream coating layer overlaps with the downstream coating layer, in the overlapping portion, the upstream coating layer is disposed on the downstream coating layer in some embodiments.

The upstream coating layer is disposed on the downstream coating layer, thereby introducing the exhaust gas after atmosphere buffering by the upstream coating layer into the downstream coating layer. As the result, the downstream coating layer can be utilized more effectively.

In the first embodiment of the present disclosure, when the first catalyst coating layer, the upstream coating layer, and the downstream coating layer overlap, in the overlapping portion, the upstream coating layer may be disposed on the first catalyst coating layer and under the downstream coating layer such that the first catalyst coating layer is not in contact with the downstream coating layer. In the first embodiment of the present disclosure, when the first catalyst coating layer, the upstream coating layer, and the downstream coating layer overlap, in the overlapping portion, the upstream coating layer may be disposed under the first catalyst coating layer and on the downstream coating layer such that the first catalyst coating layer is not in contact with the downstream coating layer. In the first embodiment of the present disclosure, when the first catalyst coating layer, the upstream coating layer, and the downstream coating layer overlap, in the overlapping portion, the mutually overlapping region of the first catalyst coating layer, the upstream coating layer, and the downstream coating layer has a lap width of usually 5% to 30% of the whole length of the substrate in the exhaust gas purification catalyst.

In the first embodiment of the present disclosure, the first catalyst coating layer being not in contact with the downstream coating layer by the upstream coating layer enables to avoid alloying of Pd and/or Pt in the first catalyst coating layer and Rh in the downstream coating layer.

In the first embodiment of the present disclosure, the second catalyst coating layer having the above-described configuration enables to perform efficient exhaust gas purification especially when, in a two-catalyst system that includes a start-up catalyst (also referred to as S/C, start-up converter, and the like) and an underfloor catalyst (also referred to as UF/C, underfloor converter, underfloor catalyst, and the like), the exhaust gas purification catalyst is used as the S/C, even in an atmosphere where a high-concentration exhaust gas is possibly present during warm-up operation and the like.

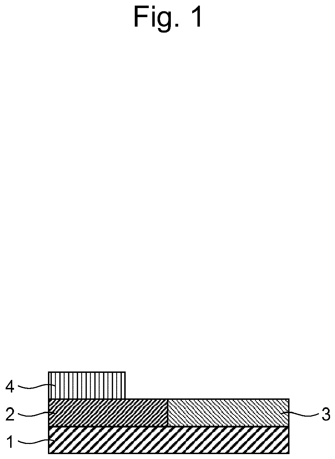

FIG. 1 to FIG. 6 illustrate examples of the first embodiment according to the present disclosure.

The exhaust gas purification catalyst of the first embodiment of the present disclosure illustrated in FIG. 1 has a substrate 1 and catalyst coating layers 2 to 4 coated on the substrate 1. The catalyst coating layers 2 to 4 are made of a second catalyst coating layer 2 and 3 having an upstream coating layer 2 and a downstream coating layer 3 that are disposed on the substrate 1 and a first catalyst coating layer 4. The upstream coating layer 2 is formed from an end portion in an upstream side with respect to an exhaust gas flow direction in the exhaust gas purification catalyst. The downstream coating layer 3 is formed from an end portion in a downstream side with respect to the exhaust gas flow direction in the exhaust gas purification catalyst. Here, the upstream coating layer 2 and the downstream coating layer 3 form a single layer together on the whole substrate 1. The first catalyst coating layer 4 is disposed on the upstream coating layer 2 in the second catalyst coating layer 2 and 3 and formed from the end portion in the upstream side with respect to the exhaust gas flow direction in the exhaust gas purification catalyst. Here, the first catalyst coating layer 4 has a width shorter than the width of the upstream coating layer 2.

In the exhaust gas purification catalyst of the first embodiment of the present disclosure illustrated in FIG. 1, a portion (lap portion) where the upstream coating layer 2 and the downstream coating layer 3 mutually overlap does not exist. Accordingly, in the exhaust gas purification catalyst, the most effective use of Rh can be realized. Accordingly, the exhaust gas purification catalyst can achieve more satisfactory purification performance and OSC performance in a compatible manner.

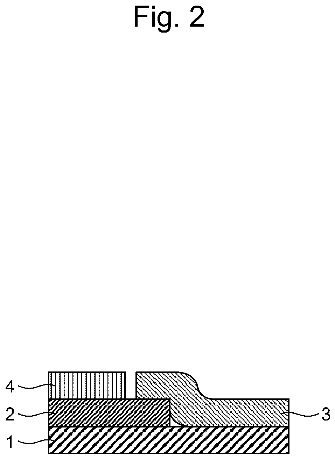

The exhaust gas purification catalyst of the first embodiment of the present disclosure illustrated in FIG. 2 includes the substrate 1 and the catalyst coating layers 2 to 4 coated on the substrate 1. The catalyst coating layers 2 to 4 are made of the second catalyst coating layer 2 and 3 having the upstream coating layer 2 and the downstream coating layer 3 that are disposed on the substrate 1 and the first catalyst coating layer 4. The upstream coating layer 2 is formed from the end portion in the upstream side with respect to the exhaust gas flow direction in the exhaust gas purification catalyst. The downstream coating layer 3 is formed from the end portion in the downstream side with respect to the exhaust gas flow direction in the exhaust gas purification catalyst. Here, the upstream coating layer 2 overlaps with the downstream coating layer 3, and in the overlapping portion, the upstream coating layer 2 is disposed under the downstream coating layer 3. The first catalyst coating layer 4 is disposed on the upstream coating layer 2 in the second catalyst coating layer 2 and 3 and formed from the end portion in the upstream side with respect to the exhaust gas flow direction in the exhaust gas purification catalyst. Here, the first catalyst coating layer 4 has a width shorter than the width of the upstream coating layer 2.

In the exhaust gas purification catalyst of the first embodiment of the present disclosure illustrated in FIG. 2, a lap portion of the upstream coating layer 2 and the downstream coating layer 3, which possibly reduces an effective use portion of Rh, exists. Meanwhile, the lap portion secures a sufficient OSC performance. Accordingly, the exhaust gas purification catalyst can achieve satisfactory purification performance and OSC performance in a compatible manner.

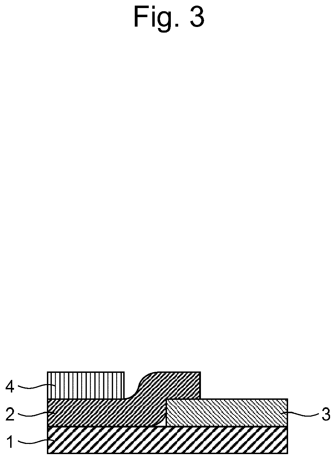

The exhaust gas purification catalyst of the first embodiment of the present disclosure illustrated in FIG. 3 includes the substrate 1 and the catalyst coating layers 2 to 4 coated on the substrate 1. The catalyst coating layers 2 to 4 are made of the second catalyst coating layer 2 and 3 having the upstream coating layer 2 and the downstream coating layer 3 that are disposed on the substrate 1 and the first catalyst coating layer 4. The upstream coating layer 2 is formed from the end portion in the upstream side with respect to the exhaust gas flow direction in the exhaust gas purification catalyst. The downstream coating layer 3 is formed from the end portion in the downstream side with respect to the exhaust gas flow direction in the exhaust gas purification catalyst. Here, the upstream coating layer 2 overlaps with the downstream coating layer 3, and in the overlapping portion, the upstream coating layer 2 is disposed on the downstream coating layer 3. The first catalyst coating layer 4 is disposed on the upstream coating layer 2 in the second catalyst coating layer 2 and 3 and formed from the end portion in the upstream side with respect to the exhaust gas flow direction in the exhaust gas purification catalyst. Here, the first catalyst coating layer 4 has a width shorter than the width of the upstream coating layer 2.

In the exhaust gas purification catalyst of the first embodiment of the present disclosure illustrated in FIG. 3, a lap portion of the upstream coating layer 2 and the downstream coating layer 3, which possibly reduces an effective use portion of Rh, exists. Meanwhile, the lap portion secures a sufficient OSC performance. Furthermore, in the lap portion, the upstream coating layer 2 performs atmosphere buffering of the exhaust gas, and the downstream coating layer 3 is utilized more effectively. Accordingly, the exhaust gas purification catalyst can achieve more satisfactory purification performance and OSC performance in a compatible manner.

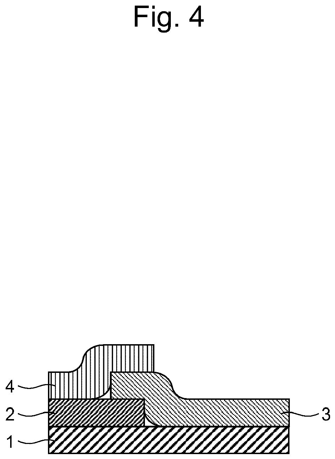

The exhaust gas purification catalyst of the first embodiment of the present disclosure illustrated in FIG. 4 includes the substrate 1 and the catalyst coating layers 2 to 4 coated on the substrate 1. The catalyst coating layers 2 to 4 are made of the second catalyst coating layer 2 and 3 having the upstream coating layer 2 and the downstream coating layer 3 that are disposed on the substrate 1 and the first catalyst coating layer 4. The second catalyst coating layers 2 and 3. The upstream coating layer 2 is formed from the end portion in the upstream side with respect to the exhaust gas flow direction in the exhaust gas purification catalyst. The downstream coating layer 3 is formed from the end portion in the downstream side with respect to the exhaust gas flow direction in the exhaust gas purification catalyst. Here, the upstream coating layer 2 overlaps with the downstream coating layer 3, and in the overlapping portion, the upstream coating layer 2 is disposed under the downstream coating layer 3. The first catalyst coating layer 4 is disposed on the upstream coating layer 2 in the second catalyst coating layer 2 and 3 and formed from the end portion in the upstream side with respect to the exhaust gas flow direction in the exhaust gas purification catalyst. Here, the first catalyst coating layer 4 has a width longer than the width of the upstream coating layer 2. A portion where the first catalyst coating layer 4, the upstream coating layer 2, and the downstream coating layer 3 overlap exists, and in the overlapping portion, the first catalyst coating layer 4 is disposed on the upstream coating layer 2 and the downstream coating layer 3.

In the exhaust gas purification catalyst of the first embodiment of the present disclosure illustrated in FIG. 4, since the upstream coating layer 2 is covered with the first catalyst coating layer 4 or the downstream coating layer 3, a contact frequency of the exhaust gas with the upstream coating layer 2 decreases, and an atmosphere buffering capacity of the upstream coating layer 2 decreases. Meanwhile, the lap portion of the upstream coating layer 2 and the downstream coating layer 3 secures a sufficient OSC performance. In addition, in the lap portion of the first catalyst coating layer 4 and the downstream coating layer 3, the first catalyst coating layer 4 performs exhaust gas purification, in particular, efficient HC conversion, and suppresses poisoning of Rh in the downstream coating layer 3. Accordingly, the exhaust gas purification catalyst can achieve a purification performance and an OSC performance in a compatible manner.

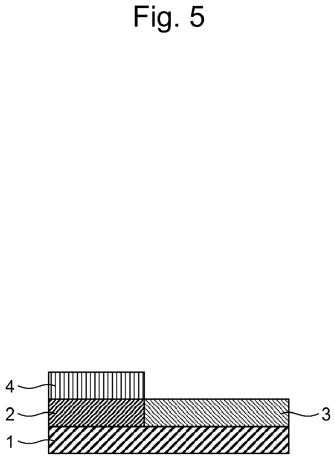

The exhaust gas purification catalyst of the first embodiment of the present disclosure illustrated in FIG. 5 includes the substrate 1 and the catalyst coating layers 2 to 4 coated on the substrate 1. The catalyst coating layers 2 to 4 are made of the second catalyst coating layer 2 and 3 having the upstream coating layer 2 and the downstream coating layer 3 that are disposed on the substrate 1 and the first catalyst coating layer 4. The upstream coating layer 2 is formed from the end portion in the upstream side with respect to the exhaust gas flow direction in the exhaust gas purification catalyst. The downstream coating layer 3 is formed from the end portion in the downstream side with respect to the exhaust gas flow direction in the exhaust gas purification catalyst. Here, the upstream coating layer 2 and the downstream coating layer 3 form a single layer together on the whole substrate 1. The first catalyst coating layer 4 is disposed on the upstream coating layer 2 in the second catalyst coating layer 2 and 3 and formed from the end portion in the upstream side with respect to the exhaust gas flow direction in the exhaust gas purification catalyst. Here, the width of the first catalyst coating layer 4 is the same as the width of the upstream coating layer 2.

In the exhaust gas purification catalyst of the first embodiment of the present disclosure illustrated in FIG. 5, since the upstream coating layer 2 is covered with the first catalyst coating layer 4, the contact frequency of the exhaust gas with the upstream coating layer 2 decreases, and the atmosphere buffering capacity of the upstream coating layer 2 decreases. Meanwhile, since a lap portion of the upstream coating layer 2 and the downstream coating layer 3 does not exist, an effective use of Rh can be realized. Accordingly, the exhaust gas purification catalyst can achieve a purification performance and an OSC performance in a compatible manner.

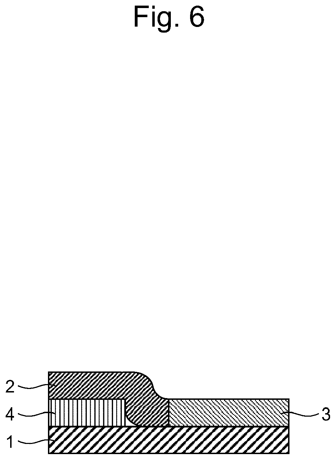

The exhaust gas purification catalyst of the first embodiment of the present disclosure illustrated in FIG. 6 includes the substrate 1 and the catalyst coating layers 2 to 4 coated on the substrate 1. The catalyst coating layer 2 to 4 are made of the first catalyst coating layer 4 disposed on the substrate 1 and the second catalyst coating layer 2 and 3 having the upstream coating layer 2 and the downstream coating layer 3. The first catalyst coating layer 4 is formed from the end portion in the upstream side with respect to the exhaust gas flow direction in the exhaust gas purification catalyst. The upstream coating layer 2 is disposed on the first catalyst coating layer 4 and the substrate 1 and formed from the end portion in the upstream side with respect to the exhaust gas flow direction in the exhaust gas purification catalyst. The downstream coating layer 3 is formed from the end portion in the downstream side with respect to the exhaust gas flow direction in the exhaust gas purification catalyst. Here, the upstream coating layer 2 and the downstream coating layer 3 form a single layer together on the whole substrate 1. The first catalyst coating layer 4 has a width shorter than the width of the upstream coating layer 2.

In the exhaust gas purification catalyst of the first embodiment of the present disclosure illustrated in FIG. 6, since the first catalyst coating layer 4 is covered with the upstream coating layer 2, the contact frequency of the exhaust gas with the first catalyst coating layer 4 decreases, and the purification performance of the first catalyst coating layer 4 decreases. Meanwhile, since a lap portion of the upstream coating layer 2 and the downstream coating layer 3 does not exist, an effective use of Rh can be realized. In addition, improved atmosphere buffering of the exhaust gas by the upstream coating layer 2 can secure a high OSC performance. Accordingly, the exhaust gas purification catalyst can achieve a purification performance and an OSC performance in a compatible manner.

Second Embodiment

In the second embodiment of the present disclosure, the second catalyst coating layer is formed from the end portion in the downstream side with respect to the exhaust gas flow direction in the exhaust gas purification catalyst.

In the second embodiment of the present disclosure, the first catalyst coating layer has a width of usually 15% to 50%, 15% to 35% in some embodiments, of the whole length of the substrate in the exhaust gas purification catalyst.

In the second embodiment of the present disclosure, the width of the first catalyst coating layer within the range enables to improve the contact frequency of Pd and/or Pt with a harmful component in the exhaust gas, such as HC while suppressing the aggregation between the catalyst metals caused by an excessively short width, for example, the aggregation of Pd and/or Pt caused by the densification of Pd and/or Pt, and thus enabling an improved exhaust gas purification performance.

In the second embodiment of the present disclosure, the second catalyst coating layer has a width of usually 65% to 95%, 80% to 95% in some embodiments, of the whole length of the substrate in the exhaust gas purification catalyst.

In the second embodiment of the present disclosure, the width of the second catalyst coating layer within the range enables to improve the contact frequency of Rh with a harmful component in the exhaust gas, such as NOx while suppressing the aggregation between the catalyst metals caused by an excessively short width, for example, the aggregation of Rh caused by the densification of Rh, and thus enabling an improved exhaust gas purification performance.

In the second embodiment of the present disclosure, the first catalyst coating layer may overlap with the second catalyst coating layer.

In the second embodiment of the present disclosure, when the first catalyst coating layer overlaps with the second catalyst coating layer, in the overlapping portion, the first catalyst coating layer may be disposed on the second catalyst coating layer.

In the second embodiment of the present disclosure, disposing the first catalyst coating layer on the second catalyst coating layer enables to convert a harmful component, in particular, NOx, by Rh contained in the second catalyst coating layer after converting a harmful component in the exhaust gas, in particular, HC, by Pd and/or Pt contained in the first catalyst coating layer.

In the second embodiment of the present disclosure, when the first catalyst coating layer overlaps with the second catalyst coating layer, in the overlapping portion, the first catalyst coating layer may be disposed under the second catalyst coating layer.

In the second embodiment of the present disclosure, disposing the first catalyst coating layer under the second catalyst coating layer enables to convert NOx by Rh while avoiding oxidation of ammonia ($NH_3$) to nitrous oxide ($N_2O$) by Pd and/or Pt, for example, during warm-up operation.

In the second embodiment of the present disclosure, when the first catalyst coating layer overlaps with the second catalyst coating layer, in the overlapping portion, the mutually overlapping region of the first catalyst coating layer and the second catalyst coating layer has a lap width of usually 5% to 30%, 10% to 20% in some embodiments, of the whole length of the substrate in the exhaust gas purification catalyst.

In the second embodiment of the present disclosure, the lap width within the range enables to perform efficient exhaust gas purification while suppressing alloy formation between Pd and/or Pt and Rh.

In the second embodiment of the present disclosure, the second catalyst coating layer having the above-described configuration enables to perform efficient exhaust gas purification especially when, in a two-catalyst system that includes S/C and UF/C, the exhaust gas purification catalyst is used as the UF/C having a function of purifying a low-concentration exhaust gas that cannot be purified by the S/C, even in an atmosphere where an oxygen concentration lowers (oxygen lacks) compared with an atmosphere in the S/C by the exhaust gas purification in the S/C.

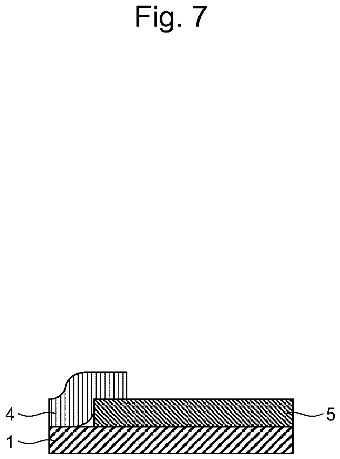

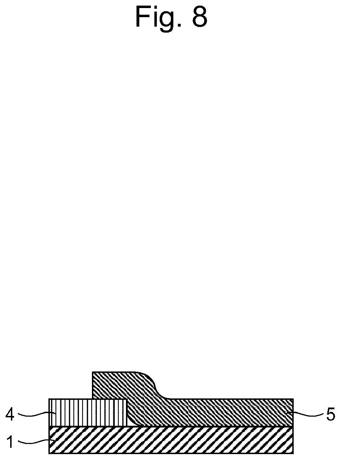

FIG. 7 and FIG. 8 illustrate examples of the second embodiment according to the present disclosure.

The exhaust gas purification catalyst of the second embodiment of the present disclosure illustrated in FIG. 7 includes the substrate 1 and the catalyst coating layers 4 and 5 coated on the substrate 1. The catalyst coating layers 4 and 5 are made of the first catalyst coating layer 4 and a second catalyst coating layer 5 that are disposed on the substrate 1. The first catalyst coating layer 4 is formed from the end portion in the upstream side with respect to the exhaust gas flow direction in the exhaust gas purification catalyst. The second catalyst coating layer 5 is formed from the end portion in the downstream side with respect to the exhaust gas flow direction in the exhaust gas purification catalyst. Here, the first catalyst coating layer 4 overlaps with the second catalyst coating layer 5, and in the overlapping portion, the first catalyst coating layer 4 is disposed on the second catalyst coating layer 5. The first catalyst coating layer 4 has a width shorter than the width of the second catalyst coating layer 5.

In the exhaust gas purification catalyst of the second embodiment of the present disclosure illustrated in FIG. 7, since the contact frequency of the exhaust gas with the first catalyst coating layer 4 is high, among the catalyst performance and the OSC performance provided in a compatible manner, the catalyst performance can be especially improved.

The exhaust gas purification catalyst of the second embodiment of the present disclosure illustrated in FIG. 8 includes the substrate 1 and the catalyst coating layers 4 and 5 coated on the substrate 1. The catalyst coating layers 4 and 5 are made of the first catalyst coating layer 4 and the second catalyst coating layer 5 that are disposed on the substrate 1. The first catalyst coating layer 4 is formed from the end portion in the upstream side with respect to the exhaust gas flow direction in the exhaust gas purification catalyst. The second catalyst coating layer 5 is formed from the end portion in the downstream side with respect to the exhaust gas flow direction in the exhaust gas purification catalyst. Here, the first catalyst coating layer 4 overlaps with the second catalyst coating layer 5, and in the overlapping portion, the first catalyst coating layer 4 is disposed under the second catalyst coating layer 5. The first catalyst coating layer 4 has a width shorter than the width of the second catalyst coating layer 5.

In the exhaust gas purification catalyst of the second embodiment of the present disclosure illustrated in FIG. 8, since the contact frequency of the exhaust gas with the second catalyst coating layer 5 is high, among the catalyst performance and the OSC performance provided in a compatible manner, the OSC performance can be especially improved.

In the first embodiment and the second embodiment of the present disclosure, the catalyst coating layer may be made only of a layer made of (consisting of) the first catalyst coating layer and the second catalyst coating layer or may have one or more layers, that is, one layer, two layers, three layers, or four layers or more (lower layer catalyst coating layer(s)) under the layer made of the first catalyst coating layer and the second catalyst coating layer, as long as the first catalyst coating layer and the second catalyst coating layer are included as uppermost layers. The composition and structure of the lower layer catalyst coating layer(s) are not limited, and may be similar to those of the first catalyst coating layer and/or the second catalyst coating layer or may be different from both of them. Furthermore, the lower layer catalyst coating layer(s) is not necessarily uniform over the whole substrate of the exhaust gas purification catalyst, and may have a different composition and structure for each region of the upstream side and the downstream side with respect to the exhaust gas flow direction like the uppermost layers.

Since the catalyst coating layer includes the first catalyst coating layer and the second catalyst coating layer, HC conversion in the first catalyst coating layer and NOx conversion in the second catalyst coating layer can be efficiently performed.

(First Catalyst Coating Layer)

The first catalyst coating layer includes Pd and/or Pt as a catalyst metal.

Since Pd and Pt have a high capacity in combustion/conversion of HC and CO and have similar performances in terms of the purification performance of harmful components, they can be handled as compatible precious metals.

Accordingly, for example, in a two-catalyst system that includes S/C and UF/C, when the exhaust gas purification catalyst of the second embodiment of the present disclosure is used as the UF/C having a function of purifying a low-concentration exhaust gas that cannot be purified by the S/C, Pd and/or Pt can be used as the catalyst metal in the first catalyst coating layer. In some embodiments, Pt, which is possibly advantageous from the aspect of cost, can be used.

Meanwhile, when the exhaust gas purification catalyst requires a satisfactory warming-up performance, Pd is used in some embodiments because Pt may be likely to cause sintering after endurance compared with Pd, resulting in a decrease in warming-up performance.

Accordingly, for example, in a two-catalyst system that includes S/C and UF/C, when the exhaust gas purification catalyst of the first embodiment of the present disclosure is used as the S/C that purifies a high-concentration exhaust gas, Pd is used as the catalyst metal in the first catalyst coating layer in some embodiments.

The content of Pd and/or Pt as the catalyst metal contained in the first catalyst coating layer is not limited, but is usually 0.2 g to 10 g, 0.5 g to 7.0 g in some embodiments, in a catalyst metal conversion (in terms of metal of Pd and/or Pt) with respect to 1 L of a capacity of a portion where the first catalyst coating layer is applied on the substrate. Note that the content of Pd and/or Pt as the catalyst metal contained in the first catalyst coating layer depends on an additive amount of a catalyst metal precursor as a material at the production of the exhaust gas purification catalyst (excluding components to be volatilized).

The inclusion of Pd and/or Pt as the catalyst metal in the first catalyst coating layer, that is, disposing the first catalyst coating layer including Pd and/or Pt in the upstream side, that is, in the front portion of the exhaust gas purification catalyst improves a conversion performance of the exhaust gas, in particular, HC, by improved ignitability caused by the densification of Pd and/or Pt.

The first catalyst coating layer may further include another precious metal, which is generally used in the technical field of the exhaust gas purification catalyst, for example, at least one selected from the group consisting of Rh, gold (Au), argentum (Ag), iridium (Ir), and ruthenium (Ru).

While Pd and/or Pt as the catalyst metal and optionally the other precious metal contained in the first catalyst coating layer function as the exhaust gas purification catalyst even as they are, they are supported by carrier particles optionally contained in the exhaust gas purification catalyst of the present disclosure in some embodiments.

The carrier particles that support Pd and/or Pt as the catalyst metal and optionally the other precious metal are not limited, but may be any metal oxide generally used as carrier particles in the technical field of the exhaust gas purification catalyst.

Accordingly, the first catalyst coating layer may further include the carrier particles. The carrier particles include metal oxide, such as silica, magnesium oxide (MgO), zirconia, ceria, alumina, titania ($TiO_2$), yttria ($Y_2O_3$), neodymium oxide ($Nd_2O_3$), lanthanum oxide ($La_2O_3$), and their composite oxides and solid solutions, such as alumina-zirconia-based composite oxide (AZ), ceria-zirconia-based composite oxide (CZ), alumina-ceria-zirconia-based composite oxide (ACZ), a combination of two or more of them, and the like. Note that the proportion of each oxide in the composite oxide, such as AZ, CZ, and ACZ is not limited, and may be a proportion generally used in the technical field of the exhaust gas purification catalyst. For CZ and ACZ, for example, the CZ and ACZ described in the item of the second catalyst coating layer can be used.

For example, since ceria has an OSC property to store oxygen in a lean atmosphere and release oxygen in a rich atmosphere, ceria can keep the inside of the exhaust gas purification catalyst a stoichiometric atmosphere, and alumina, zirconia, and other metal oxides can enhance durability of a carrier by addition.

It should be understood that, with the property of the carrier particles, there lies a possibility of improving an exhaust gas purification performance, in particular, a HC conversion performance, of the exhaust gas purification catalyst of the present disclosure depending on the type, the composition, the combination and its proportion, and/or the amount of the selected carrier particles.

When Pd and/or Pt as the catalyst metal and optionally the other precious metal are supported by the carrier particles, the contact surface between the exhaust gas and the catalyst metal can be enlarged since the specific surface area of the carrier particles is large. This enables to improve a performance of the exhaust gas purification catalyst.

For a supporting method of Pd and/or Pt as the catalyst metal and optionally the other precious metal to the carrier particles, a generally used method in the technical field of the exhaust gas purification catalyst can be used.

The content of the carrier particles in the first catalyst coating layer is not limited, but is usually 20 g to 200 g, 20 g to 100 g in some embodiments, and 40 g to 100 g in some embodiments with respect to 1 L of the capacity of the portion where the first catalyst coating layer is applied on the substrate. Note that the content of the carrier particles contained in the first catalyst coating layer depends on an additive amount of the carrier particles as a material at the production of the exhaust gas purification catalyst.

The first catalyst coating layer is mainly constituted of Pd and/or Pt as a catalyst metal, optionally another precious metal, and the carrier particles that support Pd and/or Pt as the catalyst metal and the other precious metal, but may further include other components within a range without losing the effect of the present disclosure. The other components include one or more of other metal oxides, additives, and the like used in a catalyst coating layer with this type of usage, specifically, alkali metals, such as potassium (K), sodium (Na), lithium (Li), and cesium (Cs), alkaline earth metals, such as barium (Ba), calcium (Ca), and strontium (Sr), rare earth elements, such as lanthanum (La), yttrium (Y), and cerium (Ce), transition metals, such as iron (Fe), the metal oxides that have been listed as the carrier particles (that is, the metal oxides not supporting the catalyst metal or the like), and the like. The other components may be in a form of as they are or may be in a form of being supported by the carrier particles similarly to the catalyst metal.

The content of the other components in the first catalyst coating layer, if present, is not limited, but is usually 10 g to 100 g, 20 g to 100 g in some embodiments, and 40 g to 100 g in some embodiments with respect to 1 L of the capacity of the portion where the first catalyst coating layer is applied on the substrate. Note that the content of the other components optionally contained in the first catalyst coating layer depends on an additive amount of the other components as a material at the production of the exhaust gas purification catalyst (excluding components to be volatilized).

Voids can be formed in the first catalyst coating layer. As a method of forming voids, a known technique in the technical field of the exhaust gas purification catalyst can be used and is not specifically limited.

The coat amount of the first catalyst coating layer is not limited, but is usually 40 g to 200 g, 70 g to 200 g in some embodiments, with respect to 1 L of the capacity of the portion where the first catalyst coating layer is applied on the substrate. Note that the coat amount of the first catalyst coating layer depends on the total weight of the material at the production of the exhaust gas purification catalyst (excluding components to be volatilized).

The thickness of the first catalyst coating layer is not limited, but is usually 5 $\mu$m to 50 $\mu$m, 10 $\mu$m to 30 $\mu$m in some embodiments, in an average thickness. The thickness of the first catalyst coating layer can be measured by, for example, a scanning electron microscope (SEM).

The amount of each material in the first catalyst coating layer and the thickness of the first catalyst coating layer within the ranges enable to properly keep a balance among a pressure loss, a catalyst performance, and durability in the exhaust gas purification catalyst.

The configuration of the first catalyst coating layer described above can be used in both the first embodiment and the second embodiment of the present disclosure.

(Second Catalyst Coating Layer)

First Embodiment

In the first embodiment of the present disclosure, the second catalyst coating layer has the upstream coating layer formed from the end portion in the upstream side with respect to the exhaust gas flow direction in the exhaust gas purification catalyst and the downstream coating layer formed from the end portion in the downstream side with respect to the exhaust gas flow direction in the exhaust gas purification catalyst. The upstream coating layer includes Rh as a catalyst metal and OSC materials described in detail below, and the downstream coating layer includes Rh as a catalyst metal and OSC materials described in detail below.

The content of Rh as the catalyst metal contained in the upstream coating layer is not limited, but is usually 0.05 g to 1.0 g, 0.1 g to 0.8 g in some embodiments, in a catalyst metal conversion (in terms of metal of Rh) with respect to 1 L of a capacity of a portion where the upstream coating layer is applied on the substrate. Note that the content of Rh as the catalyst metal contained in the upstream coating layer depends on an additive amount of a Rh precursor as a material at the production of the exhaust gas purification catalyst (excluding components to be volatilized).

The inclusion of the above content of Rh in the upstream coating layer enables to sufficiently provide a NOx conversion performance without HC poisoning of Rh under the atmosphere where HC is sufficiently converted by the first catalyst coating layer when the upstream coating layer is disposed under the first catalyst coating layer. The inclusion of the above content of Rh in the upstream coating layer enables to convert NOx by Rh before oxidation of ammonia (NH$_3$) to nitrous oxide (N$_2$O) by Pd and/or Pt during warm-up operation when the upstream coating layer is disposed on the first catalyst coating layer.

The content of Rh as the catalyst metal contained in the downstream coating layer is not limited, but is usually 0.05 g to 1.0 g, 0.2 g to 0.8 g in some embodiments, in a catalyst metal conversion (in terms of metal of Rh) with respect to 1 L of a capacity of a portion where the downstream coating layer is applied on the substrate. Note that the content of Rh as the catalyst metal contained in the downstream coating layer depends on an additive amount of a Rh precursor as a material at the production of the exhaust gas purification catalyst (excluding components to be volatilized).

The inclusion of the above content of Rh in the downstream coating layer enables to sufficiently provide a NOx conversion performance without HC poisoning of Rh under the atmosphere where HC is sufficiently converted by the first catalyst coating layer that exists in the upstream side.

The content of Rh as the catalyst metal contained in the downstream coating layer is high compared with the content of Rh as the catalyst metal contained in the upstream coating layer in some embodiments.

The Rh content in the downstream coating layer being higher than the Rh content in the upstream coating layer enables more effective use of the downstream coating layer that easily becomes low in temperature compared with the upstream coating layer.

Each of the upstream coating layer and the downstream coating layer may further include another precious metal, which is generally used in the technical field of the exhaust gas purification catalyst, for example, at least one selected from the group consisting of Pd, Pt, gold, argentum, iridium, and ruthenium.

While Rh as the catalyst metal and optionally the other precious metal contained in the upstream coating layer and the downstream coating layer function as the exhaust gas purification catalyst even as they are, in some embodiments, they are supported by the OSC materials described in detail below and/or carrier particles optionally contained in the exhaust gas purification catalyst of the present disclosure.

The carrier particles that support Rh as the catalyst metal and optionally the other precious metal are not limited, but may be the OSC materials described in detail below and any metal oxide generally used as carrier particles in the technical field of the exhaust gas purification catalyst.

Accordingly, the second catalyst coating layer, that is, the upstream coating layer and the downstream coating layer may each further include the carrier particles. The carrier particles include metal oxide, such as silica, magnesium oxide, zirconia, ceria, alumina, titania, yttria, neodymium oxide, lanthanum oxide, and their composite oxide and solid solution, such as alumina-zirconia-based composite oxide (AZ), and alumina-ceria-zirconia-based composite oxide (ACZ), ceria-zirconia-based composite oxide (CZ), and the like as the OCS materials described in detail below; a combination of two or more of them; and the like.

An acidic carrier, for example, silica has good compatibility with a catalyst metal that reduces NOx. A basic carrier, for example, magnesium oxide has good compatibility with potassium and barium that store NOx. Zirconia can efficiently reduce NOx by suppressing sintering of other carrier particles under a high temperature where the other carrier particles are sintered and by generating $H_2$ based on a steam reforming reaction in combination with Rh as a catalyst metal. An acid-base amphoteric carrier, for example, alumina has a high specific surface area, and therefore, alumina can be used for efficiently storing and reducing NOx. Titania can provide an effect to suppress sulfur poisoning of catalyst metal. By addition, alumina, zirconia, and other metal oxides can enhance durability of a carrier.

It should be understood that, with the property of the carrier particles, there lies a possibility of improving the exhaust gas purification performance, in particular, a NOx conversion performance of the exhaust gas purification catalyst of the present disclosure depending on the type, the composition, the combination and its proportion, and/or the amount of the selected carrier particles.

When Rh as the catalyst metal and optionally the other precious metal are supported by the carrier particles, the contact surface between the exhaust gas and the catalyst metal can be enlarged since the specific surface area of the carrier particles is large. This enables to improve the performance of the exhaust gas purification catalyst.

For a supporting method of Rh as the catalyst metal and optionally the other precious metal to the carrier particles, a generally used method in the technical field of the exhaust gas purification catalyst can be used.

The contents of the carrier particles in the upstream coating layer and the downstream coating layer (when the carrier particles include the OSC materials described in detail below, the contents of these OSC materials are excluded) are not limited. The content of the carrier particles in the upstream coating layer is, for example, usually 10 g to 100 g, 15 g to 80 g in some embodiments, with respect to 1 L of the capacity of the portion where the upstream coating layer is applied on the substrate. The content of the carrier particles in the downstream coating layer is, for example, usually 25 g to 170 g, 30 g to 100 g in some embodiments, with respect to 1 L of the capacity of the portion where the downstream coating layer is applied on the substrate. Note that the content of the carrier particles optionally contained in the upstream coating layer or the downstream coating layer depends on an additive amount of the carrier particles as a material at the production of the exhaust gas purification catalyst.

The upstream coating layer includes at least one kind of OSC material selected from the group consisting of a high specific surface area OSC material having a specific surface area of more than 40 $m^2$/g, a medium specific surface area OSC material having a specific surface area of 4 $m^2$/g to 40 $m^2$/g, and a low specific surface area OSC material having a specific surface area of less than 4 $m^2$/g. The downstream coating layer includes at least one kind of OSC material selected from the group consisting of the high specific surface area OSC material, the medium specific surface area OSC material, and the low specific surface area OSC material. However, the upstream coating layer and the downstream coating layer together include the three kinds of OSC materials of the high specific surface area OSC material, the medium specific surface area OSC material, and the low specific surface area OSC material.

Note that the high specific surface area OSC material, the medium specific surface area OSC material, and the low specific surface area OSC material may each be made of two or more kinds of OSC materials. For example, the high specific surface area OSC material may be made of a first high specific surface area OSC material and a second high specific surface area OSC material. For example, the medium specific surface area OSC material may be made of a first medium specific surface area OSC material and a second medium specific surface area OSC material. For example, the low specific surface area OSC material may be made of a first low specific surface area OSC material and a second low specific surface area OSC material.

In the present disclosure, the specific surface area means a specific surface area of each material alone measured by a BET method (BET specific surface area).

The specific surface area of the high specific surface area OSC material is 60 $m^2/g$ to 90 $m^2/g$ in some embodiments.

The specific surface area of the medium specific surface area OSC material is 30 $m^2/g$ to 40 $m^2/g$ in some embodiments.

The specific surface area of the low specific surface area OSC material is 0.5 $m^2/g$ to 2.0 $m^2/g$ in some embodiments.

Examples of the high specific surface area OSC material include alumina-ceria-zirconia-based composite oxide (ACZ), ceria-zirconia-based composite oxide (CZ), for example, ceria-zirconia-based composite oxide having a fluorite structure ($CeZrO_4$), and the like.

Alumina-ceria-zirconia-based composite oxide has ceria and zirconia dispersed within alumina, and is a composite oxide in which a part of ceria and zirconia forms a ceria-zirconia solid solution, and is observable with a transmission electron microscope (TEM) and the like. Note that the formation of the ceria-zirconia solid solution by ceria and zirconia is confirmable by, for example, X-ray diffraction (XRD).

The inclusion of alumina-ceria-zirconia-based composite oxide as the high specific surface area OSC material enables to achieve securing a sufficient OSC performance because alumina-ceria-zirconia-based composite oxide has an oxygen absorption/release rate faster than that of ceria-zirconia-based composite oxide.

The composition of alumina-ceria-zirconia-based composite oxide as the high specific surface area OSC material has a Ce/Zr mole ratio of usually 0.6 or less, for example, 0.1 to 0.6, 0.15 to 0.55 in some embodiments, and the content of an alumina ($Al_2O_3$) component is usually 40 weight% to 70 weight% with respect to the total weight of alumina-ceria-zirconia-based composite oxide. Note that the composition of alumina-ceria-zirconia-based composite oxide as the high specific surface area OSC material depends on the composition of alumina-ceria-zirconia-based composite oxide as a material at the production of the exhaust gas purification catalyst.

The composition of alumina-ceria-zirconia-based composite oxide as the high specific surface area OSC material within the range enables to sufficiently obtain the effects of suppression of particle growth by alumina (improved heat resistance, securement of specific surface area), securement of oxygen absorption/release performance (OSC performance) by ceria, and securement of stabilization effect of ceria by zirconia.

Alumina-ceria-zirconia-based composite oxide as the high specific surface area OSC material may further include one or more elements selected from rare earth elements other than cerium. The rare earth elements include, for example, scandium (Sc), yttrium, lanthanum, praseodymium (Pr), neodymium (Nd), samarium (Sm), gadolinium (Gd), terbium (Tb), dysprosium (Dy), ytterbium (Yb), and lutetium (Lu). The rare earth elements may be yttrium and lanthanum. The content of the rare earth elements is usually 2 weight% to 6 weight% as an oxide with respect to the total weight of alumina-ceria-zirconia-based composite oxide.

The inclusion of the rare earth elements in alumina-ceria-zirconia-based composite oxide as the high specific surface area OSC material enables to improve the heat resistance of alumina-ceria-zirconia-based composite oxide and improve an OSC performance.

Primary particles of alumina-ceria-zirconia-based composite oxide as the high specific surface area OSC material have a particle size (average particle size) that is not limited as long as the alumina-ceria-zirconia-based composite oxide has a specific surface area as the high specific surface area OSC material. The particle size (average particle size) of the primary particles of the alumina-ceria-zirconia-based composite oxide as the high specific surface area OSC material is not limited, but is usually 1 nm to less than 500 nm, 10 nm to 100 nm in some embodiments, in average value of a scanning electron microscope (SEM) or a transmission electron microscope (TEM).

Ceria-zirconia-based composite oxide in alumina-ceria-zirconia-based composite oxide as the high specific surface area OSC material has a crystallite diameter that is not limited. The crystallite diameter of ceria-zirconia-based composite oxide in alumina-ceria-zirconia-based composite oxide as the high specific surface area OSC material is not limited, but is usually 10 nm or less or less than 10nm, for example, 2 nm to 10 nm. Note that the crystallite diameter of ceria-zirconia-based composite oxide can be measured by, for example, a half value width of XRD.

The average particle size of alumina-ceria-zirconia-based composite oxide as the high specific surface area OSC material and the crystallite diameter of ceria-zirconia-based composite oxide in alumina-ceria-zirconia-based composite oxide within the ranges enables to sufficiently obtain the effect of the securement of an OSC performance by ceria.

Alumina-ceria-zirconia-based composite oxide as the high specific surface area OSC material can be prepared by, for example, the alkoxide process or the coprecipitation process. By preparing alumina-ceria-zirconia-based composite oxide in the alkoxide process or the coprecipitation process, it is possible to prepare a composite oxide made of uniform and fine primary particles and to easily prepare the composite oxide including a ceria-zirconia solid solution.

In the alkoxide process, all metallic alkoxides, such as alkoxides of aluminum, cerium, zirconium, and optionally the rare earth elements, are mixed and fired after hydrolyzing, thereby enabling to prepare alumina-ceria-zirconia-based composite oxide. Without using all of aluminum, cerium, zirconium, and optionally the rare earth elements as the metallic alkoxides, it is possible to use the rest of the metal as a solution of, for example, nitrate or acetylacetate salt, as long as at least one of them is used as the metallic alkoxide.

Any one of methoxide, ethoxide, butoxide, or the like may be used as the metallic alkoxide, but the metallic alkoxide with high solubility to alcohol as a solvent may be used. Note that, regarding the alcohol as the solvent, any one can be used.

In the coprecipitation process, for example, water-soluble salts, such as nitrates, of all metals, i.e. aluminum, cerium, zirconium, and optionally the rare earth elements are mixed, coprecipitated as a hydroxide with, for example, an ammonia solution, and fired, thereby enabling to prepare alumina-ceria-zirconia-based composite oxide. Without using all of aluminum, cerium, zirconium, and optionally the rare earth elements as the water-soluble salts, it is possible to use the rest of the metal as a solid of, for example, metal powder or oxide powder as long as at least one of them is used as the water-soluble salt.

Alumina-ceria-zirconia-based composite oxide thus obtained is preliminarily heat-treated in some embodiments. Preliminarily heat-treating alumina-ceria-zirconia-based composite oxide enables to further suppress the decrease of an OSC performance after endurance while suppressing an excessive crystal growth of the particles.

The specific surface area of alumina-ceria-zirconia-based composite oxide as the high specific surface area OSC material can be adjusted by reactive conditions, such as material concentration, addition rate, reaction time and reaction temperature, firing temperature and time, and pulverizing conditions and the like, especially by the firing temperature and time and the pulverizing conditions, in the alkoxide process and the coprecipitation process. Usually, the higher the firing temperature gets, the smaller the specific surface area becomes, and the longer the firing time gets, the smaller the specific surface area becomes. When alumina-ceria-zirconia-based composite oxide as the high specific surface area OSC material is prepared, the firing temperature and time are not limited, but are usually 500°C to 800°C and usually 0.5 hours to 10 hours, in the atmosphere.

Alumina-ceria-zirconia-based composite oxide as the high specific surface area OSC material may be one known in the technical field, for example, ones disclosed in JP H10-202102 A, JP 2001-232199 A, and JP 2012-187518 A.

In ceria-zirconia-based composite oxide as the high specific surface area OSC material, the content ratio of cerium to zirconium in ceria-zirconia-based composite oxide is usually in the range of 43:57 to 48:52 in mole ratio ([cerium]:[zirconium]). Note that the composition of ceria-zirconia-based composite oxide as the high specific surface area OSC material depends on the composition of ceria-zirconia-based composite oxide as a material at the production of the exhaust gas purification catalyst.

The content ratio of cerium to zirconium in ceria-zirconia-based composite oxide as the high specific surface area OSC material within the range enables to provide a sufficiently higher heat resistance and a sufficiently better OSC performance even after an exposure to a high temperature for a long time.

Ceria-zirconia-based composite oxide as the high specific surface area OSC material may further include one or more elements selected from the rare earth elements other than cerium. The rare earth elements include, for example, scandium, yttrium, lanthanum, praseodymium, neodymium, samarium, gadolinium, terbium, dysprosium, ytterbium, and lutetium. The rare earth elements may be yttrium and lanthanum. The content of the rare earth elements is usually 1 weight% to 20 weight%, 3 weight% to 7 weight% in some embodiments, as an oxide with respect to the total weight of ceria-zirconia-based composite oxide.

The inclusion of the rare earth elements in ceria-zirconia-based composite oxide as the high specific surface area OSC material enables to improve the heat resistance of ceria-zirconia-based composite oxide and improve an OSC performance.

Primary particles of ceria-zirconia-based composite oxide as the high specific surface area OSC material have a particle size (average particle size) that is not limited as long as the ceria-zirconia-based composite oxide has a specific surface area as the high specific surface area OSC material.

Ceria-zirconia-based composite oxide as the high specific surface area OSC material has a crystallite diameter that is not limited. Note that the crystallite diameter of the ceria-zirconia-based composite oxide can be measured by a half value width of XRD.

Ceria-zirconia-based composite oxide as the high specific surface area OSC material is conventionally a material used as a cocatalyst (oxygen storage material) in an exhaust gas purification catalyst, and the detail is publicly known to those skilled in the art. In ceria-zirconia-based composite oxide as the high specific surface area OSC material, ceria and zirconia form a solid solution in some embodiments. Ceria-zirconia-based composite oxide as the high specific surface area OSC material can be prepared by the alkoxide process or the coprecipitation process. In the coprecipitation process, it is possible to prepare by, for example, adding an ammonia solution in an aqueous solution in which cerium salt (for example, cerium nitrate) and zirconium salt (for example, zirconium oxynitrate) are dissolved to generate a precipitation by coprecipitation, firing the obtained precipitation after drying, further pressure-molding the fired precipitation at a pressure of usually 400 kgf/cm$^2$ to 3500 kgf/cm$^2$, and performing a reduction treatment in a temperature condition of usually 1450°C to 2000°C.

The specific surface area of ceria-zirconia-based composite oxide as the high specific surface area OSC material can be adjusted by reactive conditions, such as material concentration, addition rate, reaction time and reaction temperature, firing temperature and time, and pulverizing conditions and the like, especially by the firing temperature and time and the pulverizing conditions, in the alkoxide process and the coprecipitation process. Usually, the higher the firing temperature gets, the smaller the specific surface area becomes, and the longer the firing time gets, the smaller the specific surface area becomes. When ceria-zirconia-based composite oxide as the high specific surface area OSC material is prepared, the firing temperature and time are not limited.

Ceria-zirconia-based composite oxide as the high specific surface area OSC material may be one known in the technical field, for example, one disclosed in JP 2011-219329 A.

Examples of the medium specific surface area OSC material include alumina-ceria-zirconia-based composite oxide (ACZ), ceria-zirconia-based composite oxide (CZ), for example, ceria-zirconia-based composite oxide having a fluorite structure (CeZrO$_4$), and the like.

In terms of properties other than a specific surface area or properties that possibly change depending on the specific surface area, such as the content and the like of each component, alumina-ceria-zirconia-based composite oxide (ACZ) and ceria-zirconia-based composite oxide (CZ) possibly used as the medium specific surface area OSC material may be the same as alumina-ceria-zirconia-based composite oxide (ACZ) and ceria-zirconia-based composite oxide (CZ) possibly used as the high specific surface area OSC material.

The specific surface areas of alumina-ceria-zirconia-based composite oxide and ceria-zirconia-based composite oxide as the medium specific surface area OSC material can be adjusted by reactive conditions, such as material concentration, addition rate, reaction time and reaction temperature, firing temperature and time, and pulverizing conditions and the like, especially by the firing temperature and time and the pulverizing conditions, in the alkoxide process and the coprecipitation process. Usually, the higher the firing temperature gets, the smaller the specific surface area becomes, and the longer the firing time gets, the smaller the specific surface area becomes.

For example, primary particles of alumina-ceria-zirconia-based composite oxide as the medium specific surface area OSC material have a particle size (average particle size) that is not limited, but is usually 1 nm to 500 nm, 10 nm to 100 nm in some embodiments, in average value of SEM or TEM.

For example, ceria-zirconia-based composite oxide in alumina-ceria-zirconia-based composite oxide as the medium specific surface area OSC material has a crystallite diameter that is not limited, but is usually 25 nm or less or less than 25 nm, for example, 10 nm to 25 nm.

For example, when alumina-ceria-zirconia-based composite oxide as the medium specific surface area OSC material is prepared, the firing temperature and time are not limited, but are usually 800°C to 1200°C and usually 0.5 hours to 10 hours, in the atmosphere.

For example, primary particles of ceria-zirconia-based composite oxide as the medium specific surface area OSC material have a particle size (average particle size) that is not limited, but is usually 1 nm to 500 nm, 10 nm to 100 nm in some embodiments, in average value of SEM or TEM.

For example, ceria-zirconia-based composite oxide as the medium specific surface area OSC material has a crystallite diameter that is not limited, but is usually 25 nm or less or less than 25 nm, 10 nm to 25 nm in some embodiments.

For example, when ceria-zirconia-based composite oxide as the medium specific surface area OSC material is prepared, the firing temperature and time are not limited, but are usually 800°C to 1200°C and usually 0.5 hours to 10 hours, in the atmosphere.

Examples of the low specific surface area OSC material include ceria-zirconia-based composite oxide (CZ), for example, ceria-zirconia-based composite oxide having a pyrochlore structure (Ce$_2$Zr$_2$O$_7$, pyrochlore CZ), and the like.

The expression "having a pyrochlore structure" used for ceria-zirconia-based composite oxide means that a crystal phase (pyrochlore phase) having a pyrochlore-type regular array structure is formed with cerium ions and zirconium ions. Cerium ions and zirconium ions may be partially substituted with additional elements such as praseodymium. The array structure of the pyrochlore phase can be identified with 2θ angle peaks of an X-ray diffraction pattern obtained using CuKα, which are observed at 14.5°, 28°, 37°, 44.5° and 51°. The term "peak" used herein refers to a peak having a height from the baseline to the peak top of 30 cps or more. In addition, in order to obtain the diffraction line strength, an average diffraction line strength at 2θ = 10° to 12° is subtracted as the background level from an individual diffraction line strength value.

The content ratio of a crystal phase regularly arrayed to pyrochlore-type to the entire crystal phase, which is obtained based on the peak strength ratio of an X-ray diffraction pattern of ceria-zirconia-based composite oxide having a pyrochlore structure as the low specific surface area OSC material, is 50% or more, and in particular, 80% or more in some embodiments. The method for preparing a ceria-zirconia-based composite oxide having a pyrochlore structure as the low specific surface area OSC material is publicly known to those skilled in the art.

The pyrochlore phase ($Ce_2Zr_2O_7$) of ceria-zirconia-based composite oxide has oxygen vacancy sites. When oxygen atoms enter the sites, phase shift from the pyrochlore phase to the $\kappa$ phase ($Ce_2Zr_2O_8$) occurs. Meanwhile, the $\kappa$ phase can release oxygen atoms such that phase shift from the $\kappa$ phase to the pyrochlore phase occurs. Oxygen storage capacity of ceria-zirconia-based composite oxide is capacity to absorb/release oxygen upon phase shift between the pyrochlore phase and the $\kappa$ phase.

Here, it is known that phase shift from the $\kappa$ phase of ceria-zirconia-based composite oxide to the crystal phase having a fluorite structure ($CeZrO_4$: fluorite-type phase) occurs as a result of rearrangement. In a lean atmosphere and particularly a high-temperature lean atmosphere, phase shift from the $\kappa$ phase in pyrochlore CZ to the fluorite-type phase tends to occur.

For X-ray diffraction (XRD) measurement of the crystal phase of ceria-zirconia-based composite oxide as the low specific surface area OSC material with the use of $CuK\alpha$, the diffraction line of $2\theta = 14.5°$ is a diffraction line derived from the (111) plane of the regular phase ($\kappa$ phase), and the diffraction line of $2\theta = 29°$ is formed by superimposing a diffraction line derived from the (222) plane of the regular phase and a diffraction line derived from the (111) plane of a ceria-zirconia solid solution having no pyrochlore phase. Therefore, the I (14/29) value corresponding to the strength ratio of both diffraction lines can be designated as an indicator of the abundance of the regular phase. The I (14/29) value corresponding to the strength ratio between the diffraction line of $2\theta = 14.5°$ and the diffraction line of $2\theta = 29°$, which is calculated based on an X-ray diffraction pattern using $CuK\alpha$ obtained via X-ray diffraction measurement after heating of ceria-zirconia-based composite oxide as the low specific surface area OSC material in the atmosphere at 1100°C for five hours, is 0.017 or more in some embodiments from the aspect of the favorable maintenance of regular phase and oxygen storage capacity after a durability test. It is possible to calculate a complete $\kappa$ phase I (14/29) value of 0.04 and a complete pyrochlore phase I (14/29) value of 0.05 based on a PDF card (PDF2: 01-070-4048) for the $\kappa$ phase and a PDF card (PDF2: 01-075-2694) for the pyrochlore phase. In addition, upon XRD measurement using $CuK\alpha$ of the crystal phase of ceria-zirconia-based composite oxide as the low specific surface area OSC material, the diffraction line of $2\theta = 28.5°$ is a diffraction line derived from the (111) plane of $CeO_2$ itself. Therefore, the I (28/29) value corresponding to the strength ratio between the diffraction line of $2\theta = 28.5°$ and the diffraction line of $2\theta = 29°$ can be designated as an indicator representing the degree of phase splitting of $CeO_2$ from the composite oxide. The I (28/29) value corresponding to the strength ratio between the diffraction line of $2\theta = 28.5°$ and the diffraction line of $2\theta = 29°$, which is calculated based on an X-ray diffraction pattern using $CuK\alpha$ obtained via X-ray diffraction measurement after heating of ceria-zirconia-based composite oxide as the low specific surface area OSC material in the atmosphere at 1100°C for five hours, is 0.05 or less in some embodiments from the aspect of suppression of phase splitting of ceria and oxygen storage capacity after the durability test.

The secondary particle size (D50) of ceria-zirconia-based composite oxide having a pyrochlore structure as the low specific surface area OSC material is from 3 $\mu$m to 7 $\mu$m, from 3 $\mu$m to 6 $\mu$m in some embodiments, and from 3 $\mu$m to 5 $\mu$m in some embodiments. When the secondary particle size (D50) of pyrochlore CZ as the low specific surface area OSC material falls within such range, it is possible to significantly increase the oxygen absorption/release rate while having sufficient heat resistance and maintaining the oxygen storage volume at high levels, compared with pyrochlore CZ having a secondary particle size (D50) that does not fall within the range. In addition, ceria-zirconia-based composite oxide having a fluorite structure does not have such relationship between the secondary particle size and the oxygen absorption/release rate. Therefore, pyrochlore CZ has a specific feature of having a significantly improved oxygen absorption/release rate when having the secondary particle size (D50) within a particular range, which is an unexpected effect. The secondary particle size has a large impact on pyrochlore CZ because pyrochlore CZ is characterized by rapid internal oxygen diffusion, which is particular to a pyrochlore structure. Meanwhile, heat resistance having a trade-off relationship with the oxygen absorption/release rate exhibits different sensitivity to the secondary particle size from the oxygen absorption/release rate, resulting in maintenance of sufficiently high heat resistance. As a result, it is estimated that having the secondary particle size (D50) of pyrochlore CZ within a particular range enables to significantly increase the oxygen absorption/release rate while having high heat resistance and maintaining the oxygen storage volume at high levels. Accordingly, when pyrochlore CZ has a secondary particle size (D50) of 3 $\mu$m to 7 $\mu$m, it is possible to achieve the oxygen storage volume and the oxygen absorption/release rate in a compatible manner while having sufficient heat resistance, and in particular, significantly increase the oxygen absorption/release rate.

Here, the term "secondary particle" refers to an aggregation of primary particles, and the term "primary particles" generally refers to the smallest particles that constitute a powder. Primary particles can be determined via observation using SEM or TEM. The primary particle size of pyrochlore CZ as the low specific surface area OSC material is usually smaller than the secondary particle size and not limited as long as pyrochlore CZ has a specific surface area as the low specific surface area OSC material. Primary particles of pyrochlore CZ as the low specific surface area OSC material have a particle size (average particle size) that is not limited. The primary particle size (D50) used herein refers to the average primary particle size upon determination of particle number distribution. Meanwhile, the secondary particle size (D50) means that the secondary particle size corresponds to the particle size at 50% in the cumulative distribution (also referred to as median size or D50). For example, the secondary particle size (D50) is a particle size at 50% of a cumulative volume distribution curve (that is, particle size at 50% in the cumulative distribution on a volumetric basis) when the total volume is 100% for the particle size distribution on a volumetric basis obtained via measurement by the laser diffraction scattering method.

Pyrochlore CZ having a secondary particle size (D50) within a particular range as the low specific surface area OSC material can be obtained by, for example, mixing starting materials to obtain a precipitate, drying and firing the obtained precipitate, pulverizing the resulting product to obtain a powder, conducting pressure-molding of the obtained powder, subjecting the molded body to reduction treatment, and pulverizing the obtained product to result in a predetermined secondary particle size (D50). The molded body can be pulverized using, for example, a ball mill, a vibration mill, a stream mill, a pin mill, or the like.

Pyrochlore CZ as the low specific surface area OSC material has a specific surface area that can be adjusted especially by firing temperature and time and pulverizing conditions. Usually, the higher the firing temperature gets, the smaller the specific surface area becomes, and the longer the firing time gets, the smaller the specific surface area becomes. When ceria-zirconia-based composite oxide as the low specific surface area OSC material is prepared, the firing temperature and time are not limited.

The mole ratio (Zr/Ce) between zirconium (Zr) and cerium (Ce) of pyrochlore CZ as the low specific surface area OSC material is 1.13 < Zr/Ce < 1.30.

Pyrochlore CZ as the low specific surface area OSC material may contain praseodymium, and it contains praseodymium, in addition to cerium and zirconium, in some embodiments. A praseodymium reduction reaction is expressed by the formula: $Pr_6O_{11} \rightarrow 3Pr_2O_3 + O_2$ where ΔG (Gibbs free energy) is negative, and therefore, praseodymium is considered to facilitate a $CeO_2$ reduction reaction expressed by the formula: $2CeO_2 \rightarrow Ce_2O_3 + 0.5O_2$ where ΔG is positive. When pyrochlore CZ as the low specific surface area OSC material contains praseodymium, pyrochlore CZ contains praseodymium at 0.5 mol% to 5 mol% based on the total amount of all positive ions in some embodiments, and the mole ratio between Zr and (Ce+Pr) is 1.13 < Zr/(Ce+Pr) < 1.30 in some embodiments.

Pyrochlore CZ as the low specific surface area OSC material may contain additional elements other than praseodymium, in addition to cerium and zirconium. Examples of additional elements other than praseodymium include, but are not limited to, rare earth elements other than cerium or praseodymium, and alkaline earth metals. Examples of rare earth elements other than cerium or praseodymium include scandium, yttrium, lanthanum, neodymium, samarium, gadolinium, terbium, dysprosium, ytterbium, and lutetium. Among these elements, lanthanum, neodymium, yttrium, and scandium are used in some embodiments from the aspect of the tendency that when supporting precious metals, interaction between them and precious metals is intensified, resulting in an increase in affinity. In addition, examples of alkaline earth metal elements include magnesium, calcium, strontium, barium, and radium (Ra). Among these elements, magnesium, calcium, and barium are used in some embodiments from the aspect of the tendency that when supporting precious metals, interaction between them and precious metals is intensified, resulting in an increase in affinity. The content of additional elements is usually 5 mol% or less based on the total amount of all positive ions of pyrochlore CZ.

Pyrochlore CZ as the low specific surface area OSC material may be one known in the technical field, for example, one disclosed in JP 2018-038999 A.

For example, primary particles of pyrochlore CZ as the low specific surface area OSC material have a particle size (average particle size) that is not limited, but is usually more than 1 μm, more than 1 μm to 20 μm in some embodiments, in average value of SEM or TEM.

For example, pyrochlore CZ as the low specific surface area OSC material has a crystallite diameter that is not limited, but is usually more than 100 nm, for example, 150 nm to 500 nm.

For example, when pyrochlore CZ as the low specific surface area OSC material is prepared, the firing temperature and time are not limited, but are usually 1100°C to 2000°C and usually 0.5 hours to 15 hours, in the atmosphere.

The content of the high specific surface area OSC material contained in the upstream coating layer is not limited, but is usually 10 g to 100 g, 10 g to 80 g in some embodiments, with respect to 1 L of the capacity of the portion where the upstream coating layer is applied on the substrate. Note that the content of the high specific surface area OSC material possibly contained in the upstream coating layer depends on an additive amount of the high specific surface area OSC material as a material at the production of the exhaust gas purification catalyst.

The content of the medium specific surface area OSC material contained in the upstream coating layer is not limited, but is usually 0 g to 45 g, 0 g in some embodiments, with respect to 1 L of the capacity of the portion where the upstream coating layer is applied on the substrate. Note that the content of the medium specific surface area OSC material possibly contained in the upstream coating layer depends on an additive amount of the medium specific surface area OSC material as a material at the production of the exhaust gas purification catalyst.

The content of the low specific surface area OSC material contained in the upstream coating layer is not limited, but is usually 3 g to 25 g, 5 g to 20 g in some embodiments, with respect to 1 L of the capacity of the portion where the upstream coating layer is applied on the substrate. Note that the content of the low specific surface area OSC material possibly contained in the upstream coating layer depends on an additive amount of the low specific surface area OSC material as a material at the production of the exhaust gas purification catalyst.

The content of the high specific surface area OSC material contained in the downstream coating layer is not limited, but is usually 0 g to 80 g, 0 g in some embodiments, with respect to 1 L of the capacity of the portion where the downstream coating layer is applied on the substrate. Note that the content of the high specific surface area OSC material possibly contained in the downstream coating layer depends on an additive amount of the high specific surface area OSC material as a material at the production of the exhaust gas purification catalyst.

The content of the medium specific surface area OSC material contained in the downstream coating layer is not limited, but is usually 20 g to 80 g, 40 g to 80 g in some embodiments, with respect to 1 L of the capacity of the portion where the downstream coating layer is applied on the substrate. Note that the content of the medium specific surface area OSC material possibly contained in the downstream coating layer depends on an additive amount of the medium specific surface area OSC material as a material at the production of the exhaust gas purification catalyst.

The content of the low specific surface area OSC material contained in the downstream coating layer is not limited, but is usually 5 g to 40 g, 20 g to 40 g in some embodiments, with respect to 1 L of the capacity of the portion where the downstream coating layer is applied on the substrate. Note that the content of the low specific surface area OSC material possibly contained in the downstream coating layer depends on an additive amount of the low specific surface area OSC material as a material at the production of the exhaust gas purification catalyst.

The upstream coating layer includes the high specific surface area OSC material and the low specific surface area OSC material in some embodiments.

The inclusion of the high specific surface area OSC material and the low specific surface area OSC material in the upstream coating layer enables to efficiently convert NOx in the upstream side where an oxygen concentration is relatively high and HC is less likely to accumulate, compared with the downstream side, when the exhaust gas purification catalyst of the first embodiment of the present disclosure is used as the S/C.

The downstream coating layer includes the medium specific surface area OSC material and the low specific surface area OSC material in some embodiments.

The inclusion of the medium specific surface area OSC material and the low specific surface area OSC material in the downstream coating layer enables to efficiently convert NOx in the downstream side where an oxygen concentration is relatively low and HC is likely to accumulate, compared with the upstream side, while avoiding the accumulation of HC by the OSC materials having relatively low specific surface areas when the exhaust gas purification catalyst of the first embodiment of the present disclosure is used as the S/C.

Accordingly, the inclusion of the high specific surface area OSC material and the low specific surface area OSC material in the upstream coating layer and the inclusion of the medium specific surface area OSC material and the low specific surface area OSC material in the downstream coating layer enable to have an OSC performance and a catalyst performance in a more compatible manner.

In the first embodiment of the present disclosure, the amount of ceria in the high specific surface area OSC material is not limited, but is usually 10 weight% to 40 weight%, 20 weight% to 40 weight% in some embodiments, with respect to a ceria weight in the whole second catalyst coating layer (that is, the upstream coating layer and the downstream coating layer).

In the first embodiment of the present disclosure, the amount of ceria in the medium specific surface area OSC material is not limited, but is usually 10 weight% to 45 weight%, 10 weight% to 40 weight% in some embodiments, and 20 weight% to 40 weight% in some embodiments, with respect to the ceria weight in the whole second catalyst coating layer.

In the first embodiment of the present disclosure, the amount of ceria in the high specific surface area OSC material and the medium specific surface area OSC material is not limited, but is usually 80 weight% or less, 60 weight% or less in some embodiments, and 40 weight% or less in some embodiments, with respect to the ceria weight in the whole second catalyst coating layer.

In the first embodiment of the present disclosure, the amount of ceria in the low specific surface area OSC material is not limited, but is usually 20 weight% to 80 weight%, 40 weight% to 80 weight% in some embodiments, and 40 weight% to 60 weight% in some embodiments, with respect to the ceria weight in the whole second catalyst coating layer.

Here, in the first embodiment of the present disclosure, when the second catalyst coating layer does not contain a compound, which contains ceria, other than the high specific surface area OSC material, the medium specific surface area OSC material, or the low specific surface area OSC material, the sum of all the amounts of ceria in the high specific surface area OSC material, the medium specific surface area OSC material, and the low specific surface area OSC material becomes 100 weight%.

The ceria amounts in the respective OSC materials in the second catalyst coating layer within the ranges enable to establish both OSC performances at a low temperature and a high temperature and an exhaust gas purification performance, in particular, a NOx conversion performance in a more compatible manner.

Specifically, in the first embodiment of the present disclosure, the inclusion of Rh as well as the three kinds of OSC materials having different specific surface areas in the second catalyst coating layer (the upstream coating layer

and the downstream coating layer) enables to suppress HC poisoning of Rh, in particular, suppress HC poisoning of Rh under conditions of (1) a rich air-fuel ratio (A/F) and (2) a large air intake quantity during, for example, acceleration in association with a decreased physical size of the exhaust gas purification catalyst (high air intake quantity or high Ga: meaning the same as high space velocity or high SV) and to secure OSC performances at a low temperature and a high temperature in a compatible manner, thereby enabling to obtain the exhaust gas purification catalyst with an improved catalyst performance, in particular, an improved NOx conversion performance.

The upstream coating layer and the downstream coating layer that constitute the second catalyst coating layer are each mainly constituted of Rh as a catalyst metal, optionally another precious metal, the carrier particles that support Rh as the catalyst metal and the other precious metal, and the OSC materials, but may further include other components within a range without losing the effect of the present disclosure. The other components include one or more of other metal oxides, additives, and the like used in a catalyst coating layer with this type of usage, specifically, alkali metals, such as potassium, sodium, lithium, and cesium, alkaline earth metals, such as barium, calcium, and strontium, rare earth elements, such as lanthanum, yttrium, and cerium, transition metals, such as iron, the metal oxides that have been listed as the carrier particles (that is, the metal oxides not supporting Rh or the like), and the like. The other components may be in a form of as they are or may be in a form of being supported by the carrier particles similarly to Rh and the like.

In each of the upstream coating layer and the downstream coating layer that constitute the second catalyst coating layer, the content of the other components in the coating layer, if present, is not limited, but is usually 20 g to 120 g, 80 g to 120 g in some embodiments, with respect to 1 L of the capacity of the portion where the upstream coating layer or the downstream coating layer is applied on the substrate. Note that the content of the other components possibly contained in the upstream coating layer or the downstream coating layer depends on an additive amount of the other components as a material at the production of the exhaust gas purification catalyst (excluding components to be volatilized).

The coat amount of the upstream coating layer is not limited, but is usually 30 g to 250 g, 50 g to 250 g in some embodiments, with respect to 1 L of the capacity of the portion where the upstream coating layer is applied on the substrate. Note that the coat amount of the upstream coating layer depends on the total weight of the material at the production of the exhaust gas purification catalyst (excluding components to be volatilized).

The coat amount of the downstream coating layer is not limited, but is usually 50 g to 250 g, 100 g to 250 g in some embodiments, with respect to 1 L of the capacity of the portion where the downstream coating layer is applied on the substrate. Note that the coat amount of the downstream coating layer depends on the total weight of the material at the production of the exhaust gas purification catalyst (excluding components to be volatilized).

The thickness of the upstream coating layer is not limited, but is usually 5 $\mu$m to 50 $\mu$m, 10 $\mu$m to 30 $\mu$m in some embodiments, in an average thickness. The thickness of the upstream coating layer can be measured by, for example, SEM.

The thickness of the downstream coating layer is not limited, but is usually 5 $\mu$m to 50 $\mu$m, 10 $\mu$m to 30 $\mu$m in some embodiments, in an average thickness. The thickness of the downstream coating layer can be measured by, for example, SEM.

The amounts of the respective materials in the upstream coating layer and the downstream coating layer and the thicknesses of the upstream coating layer and the downstream coating layer within the ranges enable to properly keep a balance among a pressure loss, a catalyst performance, and durability in the exhaust gas purification catalyst.

Second Embodiment

In the second embodiment of the present disclosure, the second catalyst coating layer includes Rh as a catalyst metal and three kinds of OSC materials having different specific surface areas described in detail below.

The content of Rh as the catalyst metal contained in the second catalyst coating layer is not limited, but is usually 0.05 g to 1.0 g, 0.2 g to 0.8 g in some embodiments, in a catalyst metal conversion (in terms of metal of Rh) with respect to 1 L of a capacity of a portion where the second catalyst coating layer is applied on the substrate. Note that the content of Rh as the catalyst metal contained in the second catalyst coating layer depends on an additive amount of a Rh precursor as a material at the production of the exhaust gas purification catalyst (excluding components to be volatilized).

The inclusion of the above content of Rh in the second catalyst coating layer enables to sufficiently provide a NOx conversion performance without HC poisoning of Rh under the atmosphere where HC is sufficiently converted by the first catalyst coating layer.

The second catalyst coating layer may further include another precious metal, which is generally used in the technical field of the exhaust gas purification catalyst, for example, at least one selected from the group consisting of Pd, Pt, gold, argentum, iridium, and ruthenium.

Aspects of Rh and optionally another precious metal contained in the second catalyst coating layer in each catalyst coating layer can be similar to the aspects of Rh and optionally another precious metal described in the first embodiment, that is, the aspects of as they are, the aspect supported by carrier particles, and the like. When Rh and optionally the other precious metal contained in the second catalyst coating layer are supported by carrier particles, the content of the carrier particles in the second catalyst coating layer (when the carrier particles include the OSC materials described in the first embodiment, the contents of these OSC materials are excluded) is, for example, usually 20 g to 170 g, 50 g to 140 g in some embodiments, with respect to 1 L of the capacity of the portion where the second catalyst coating layer is applied on the substrate. Note that the content of the carrier particles possibly contained in the second catalyst coating layer depends on an additive amount of the carrier particles as a material at the production of the exhaust gas purification catalyst.

In the second embodiment of the present disclosure, the OSC materials contained in the second catalyst coating layer are made of a high specific surface area OSC material, a medium specific surface area OSC material, and a low specific surface area OSC material. Here, the high specific surface area OSC material, the medium specific surface area OSC material, and the low specific surface area OSC material are as described in the first embodiment.

In the second embodiment of the present disclosure, the inclusion of the three kinds of OSC materials having different specific surface areas in the second catalyst coating layer enables to have an OSC performance and an exhaust gas purification performance, in particular, a NOx conversion performance in a compatible manner.

In the second embodiment of the present disclosure, the content of the high specific surface area OSC material contained in the second catalyst coating layer is not limited, but is usually 10 g to 80 g, 20 g to 40 g in some embodiments, with respect to 1 L of the capacity of the portion where the second catalyst coating layer is applied on the substrate. Note that the content of the high specific surface area OSC material contained in the second catalyst coating layer depends on an additive amount of the high specific surface area OSC material as a material at the production of the exhaust gas purification catalyst.

In the second embodiment of the present disclosure, the content of the medium specific surface area OSC material contained in the second catalyst coating layer is not limited, but is usually 10 g to 40 g, 20 g to 40 g in some embodiments, with respect to 1 L of the capacity of the portion where the second catalyst coating layer is applied on the substrate. Note that the content of the medium specific surface area OSC material contained in the second catalyst coating layer depends on an additive amount of the medium specific surface area OSC material as a material at the production of the exhaust gas purification catalyst.

In the second embodiment of the present disclosure, the content of the low specific surface area OSC material contained in the second catalyst coating layer is not limited, but is usually 5 g to 30 g, 10 g to 30 g in some embodiments, with respect to 1 L of the capacity of the portion where the second catalyst coating layer is applied on the substrate. Note that the content of the low specific surface area OSC material contained in the second catalyst coating layer depends on an additive amount of the low specific surface area OSC material as a material at the production of the exhaust gas purification catalyst.

In the second embodiment of the present disclosure, the inclusion of the above contents of the three kinds of OSC materials having different specific surface areas in the second catalyst coating layer enables to establish both OSC performances at a low temperature and a high temperature and an exhaust gas purification performance, in particular, a NOx conversion performance in a more compatible manner.

Specifically, in the second embodiment of the present disclosure, the inclusion of Rh as well as the three kinds of OSC materials having different specific surface areas in the second catalyst coating layer enables to suppress HC poisoning of Rh, in particular, suppress HC poisoning of Rh under conditions of (1) a rich air-fuel ratio (A/F) and (2) a large air intake quantity during, for example, acceleration in association with a decreased physical size of the exhaust gas purification catalyst (high air intake quantity or high Ga: meaning the same as high space velocity or high SV) and to secure an OSC performance in a compatible manner, thereby enabling to obtain the exhaust gas purification catalyst with an improved catalyst performance, in particular, an improved NOx conversion performance.

In the second catalyst coating layer of the present disclosure, the second catalyst coating layer is mainly constituted of Rh as a catalyst metal, opptionally another precious metal, the carrier particles that support Rh as the catalyst metal and the other precious metal, and the OSC materials, but may further include other components within a range without losing the effect of the present disclosure. The other components include one or more of other metal oxides, additives, and the like used in a catalyst coating layer with this type of usage, specifically, alkali metals, such as potassium, sodium, lithium, and cesium, alkaline earth metals, such as barium, calcium, and strontium, rare earth elements, such as lanthanum, yttrium, and cerium, transition metals, such as iron, the metal oxides that have been listed as the carrier particles (that is, the metal oxides not supporting Rh or the like), and the like. The other components may be in a form of as they are or may be in a form of being supported by the carrier particles similarly to Rh and the like.

The content of the other components in the second catalyst coating layer, if present, is not limited, but is usually 20 g to 120 g, 80 g to 120 g in some embodiments, with respect to 1 L of the capacity of the portion where the second catalyst coating layer is applied on the substrate. Note that the content of the other components possibly contained in the second catalyst coating layer depends on an additive amount of the other components as a material at the production of the exhaust gas purification catalyst (excluding components to be volatilized).

The coat amount of the second catalyst coating layer is not limited, but is usually 50 g to 250 g, 150 g to 250 g in some embodiments, with respect to 1 L of the capacity of the portion where the second catalyst coating layer is applied on the substrate. Note that the coat amount of the second catalyst coating layer depends on the total weight of the material at the production of the exhaust gas purification catalyst (excluding components to be volatilized).

The thickness of the second catalyst coating layer is not limited, but is usually 5 $\mu$m to 50 $\mu$m, 10 $\mu$m to 30 $\mu$m in some embodiments, in an average thickness. The thickness of the second catalyst coating layer can be measured by, for example, SEM.

The amount of each material in the second catalyst coating layer and the thickness of the second catalyst coating layer within the ranges enable to properly keep a balance among a pressure loss, a catalyst performance, and durability in the exhaust gas purification catalyst.

(Method for Producing Exhaust Gas Purification Catalyst)

The exhaust gas purification catalyst of the present disclosure can be produced using a known coating technique except that the constituent components of the exhaust gas purification catalyst described above are used.

For example, the exhaust gas purification catalyst of the present disclosure having a substrate and a catalyst coating layer, which includes a first catalyst coating layer and a second catalyst coating layer, coated on the substrate can be produced by the following method. The method includes (i) a step of preparing a first catalyst coating layer slurry including a catalyst metal precursor containing Pd and/or Pt as a catalyst metal and a solvent, (ii) a step of preparing a second catalyst coating layer slurry including a Rh precursor containing Rh as a catalyst metal, a solvent, a high specific surface area OSC material, a medium specific surface area OSC material, and a low specific surface area OSC material, (iii) a step of applying the first catalyst coating layer slurry prepared in the step (i) from an end portion in an upstream side with respect to an exhaust gas flow direction in the exhaust gas purification catalyst to form the first catalyst coating layer, and (iv) a step of applying the second catalyst coating layer slurry prepared in the step (ii) to form the second catalyst coating layer.

Here, the high specific surface area OSC material, the medium specific surface area OSC material, and the low specific surface area OSC material are as described above.

First Embodiment

When the exhaust gas purification catalyst of the first embodiment of the present disclosure is produced, the step (ii) includes, as the step of preparing the second catalyst coating layer slurry, (ii-1) a step of preparing a downstream coating layer slurry to be formed from an end portion in a downstream side with respect to the exhaust gas flow direction in the exhaust gas purification catalyst, and (ii-2) a step of preparing an upstream coating layer slurry to be formed from the end portion in the upstream side with respect to the exhaust gas flow direction in the exhaust gas purification catalyst. Furthermore, the step (iv) includes, as the step of forming the second catalyst coating layer, (iv-1) a step of applying the downstream coating layer slurry prepared in the step (ii-1) to form a downstream coating layer, and (iv-2) a step of applying the upstream coating layer slurry prepared in the step (ii-2) to form an upstream coating layer. Note that the step sequence of (i) to (iv) is not limited as long as the step (iii) is performed after the step (i), the step (iv-1) is performed after the step (ii-1), and the step (iv-2) is performed after the step (ii-2). For example, in addition to the sequence of (i) → (ii-1) → (ii-2) → (iii) → (iv-1) → (iv-2), a sequence of (ii-2) → (ii-1) → (iv-1) → (iv-2) ---+ (i) → (iii), (i) → (ii-1) → (ii-2) → (iv-1) → (iii) → (iv-2), (ii-1) → (iv-1) → (ii-2) → (iv-2) → (i) → (iii), (i) → (iii) → (ii-1) → (iv-1) → (ii-2) → (iv-2), or the like can be employed.

When the exhaust gas purification catalyst of the first embodiment of the present disclosure is produced, in the step (iii), the first catalyst coating layer slurry is applied over from 20% to 50% of a whole length of the substrate in the exhaust gas purification catalyst in some embodiments. Furthermore, in the step (iv-1), the downstream coating layer slurry is applied over from 30% to 70% of the whole length of the substrate in the exhaust gas purification catalyst in some embodiments. In addition, in the step (iv-2), the upstream coating layer slurry is applied over from 30% to 70% of the whole length of the substrate in the exhaust gas purification catalyst in some embodiments.

When the exhaust gas purification catalyst of the first embodiment of the present disclosure is produced, the step (ii-1) is a step of preparing the downstream coating layer slurry including the Rh precursor, the solvent, the medium specific surface area OSC material, and the low specific surface area OSC material in some embodiments. Furthermore, the step (ii-2) is a step of preparing the upstream coating layer slurry including the Rh precursor, the solvent, the high specific surface area OSC material, and the low specific surface area OSC material in some embodiments.

When the exhaust gas purification catalyst of the first embodiment of the present disclosure is produced, in the steps (ii-1) and (ii-2), the amount of ceria in the high specific surface area OSC material used is 10 weight% to 40 weight% with respect to a total weight of ceria in the upstream coating layer and the downstream coating layer as the second catalyst coating layer in some embodiments. Furthermore, the amount of ceria in the medium specific surface area OSC material used is 10 weight% to 40 weight% with respect to the total weight of ceria in the upstream coating layer and the downstream coating layer as the second catalyst coating layer in some embodiments. In addition, the amount of ceria in the high specific surface area OSC material used and the medium specific surface area OSC material used is 60 weight% or less with respect to the total weight of ceria in the upstream coating layer and the downstream coating layer as the second catalyst coating layer in some embodiments. Furthermore, the amount of ceria in the low specific surface area OSC material used is 40 weight% to 80 weight% with respect to the total weight of ceria in the upstream coating layer and the downstream coating layer as the second catalyst coating layer in some embodiments. Here, the amounts of ceria in the high specific surface area OSC material, the medium specific surface area OSC material, and the low specific surface area OSC material are adjusted such that the sum of all the amounts becomes 100 weight%.

When the exhaust gas purification catalyst of the first embodiment of the present disclosure is produced, the step (i) is a step of preparing the first catalyst coating layer slurry including a Pd precursor and the solvent in some embodiments.

Second Embodiment

When the exhaust gas purification catalyst of the second embodiment of the present disclosure is produced, the step (iv) is a step of applying the second catalyst coating layer slurry prepared in the step (ii) from the end portion in the downstream side with respect to the exhaust gas flow direction in the exhaust gas purification catalyst to form the second catalyst coating layer. Note that the step sequence of (i) to (iv) is not limited as long as the step (iii) is performed after the step (i), and the step (iv) is performed after the step (ii). For example, in addition to the sequence of (i) → (ii) → (iii) → (iv), a sequence of (ii) → (iv) → (i) → (iii), (i) → (iii) → (ii) → (iv), or the like can be employed.

When the exhaust gas purification catalyst of the second embodiment of the present disclosure is produced, in the step (iii), the first catalyst coating layer slurry is applied over from 15% to 50% of the whole length of the substrate in the exhaust gas purification catalyst in some embodiments. Furthermore, in the step (iv), the second catalyst coating layer slurry is applied over from 65% to 95% of the whole length of the substrate in the exhaust gas purification catalyst in some embodiments.

When the exhaust gas purification catalyst of the second embodiment of the present disclosure is produced, the step (i) is a step of preparing the first catalyst coating layer slurry including a Pt precursor and the solvent in some embodiments.

For example, the exhaust gas purification catalyst of the present disclosure can be produced as follows.

When the exhaust gas purification catalyst of the first embodiment of the present disclosure is produced, first, as the step (ii-1), the catalyst coating layer slurry for the downstream coating layer is prepared. The catalyst coating layer slurry for the downstream coating layer includes the materials constituting the downstream coating layer, that is, the Rh precursor (for example, salt (for example, nitrate) containing Rh or the like), one or more kinds of OSC materials selected from the group consisting of the high specific surface area OSC material, the medium specific surface area OSC material, and the low specific surface area OSC material (for example, alumina-ceria-zirconia-based composite oxide as the medium specific surface area OSC material and ceria-zirconia-based composite oxide as the low specific surface area OSC material, or the like), and the solvent (for example, water, alcohol, a mixture of water and alcohol, or the like), as well as optionally further carrier particles (for example, alumina-zirconia-based composite oxide), an additive (for example, binder), and the like. Subsequently, as the step (iv-1), in the region where the downstream coating layer is formed on the substrate, the slurry is coated by a wash coat method. After blowing off extra slurry with a blower or the like, for example, it is dried for usually one hour to three hours at usually 100°C to 150°C in the atmosphere to remove the solvent, and is fired for usually one hour to three hours at usually 450°C to 550°C in the atmosphere to form the downstream coating layer. Subsequently, as the step (ii-2), the catalyst coating layer slurry for the upstream coating layer is prepared. The catalyst coating layer slurry for the upstream coating layer includes the materials constituting the upstream coating layer, that is, the Rh precursor (for example, salt (for example, nitrate) containing Rh or the like), one or more kinds of OSC materials selected from the group consisting of the high specific surface area OSC material, the medium specific surface area OSC material, and the low specific surface area OSC material (for example, alumina-ceria-zirconia-based composite oxide as the high specific surface area OSC material and ceria-zirconia-based composite oxide as the low specific surface area OSC material, or the like), and the solvent (for example, water, alcohol, a mixture of water and alcohol, or the like), as well as optionally further carrier particles (for example, alumina-zirconia-based composite oxide), an additive (for example, binder), and the like. Next, as the step (iv-2), in the region where the upstream coating layer is formed on the substrate where the downstream coating layer has been formed, the slurry is coated by the wash coat method. After blowing off extra slurry with a blower or the like, for example, it is dried for usually one hour to three hours at usually 100°C to 150°C in the atmosphere to remove the solvent, and is fired for usually one hour to three hours at usually 450°C to 550°C in the atmosphere to form the upstream coating layer. Subsequently, as the step (i), the catalyst coating layer slurry for the first catalyst coating layer is prepared. The catalyst coating layer slurry for the first catalyst coating layer includes the materials constituting the first catalyst coating layer, that is, the precursor of Pd and/or Pt as a catalyst metal (for example, salt (for example, nitrate) containing Pd and/or Pt or the like, in particular, palladium nitrate), and the solvent (for example, water, alcohol, a mixture of water and alcohol, or the like), as well as optionally carrier particles (for example, alumina-ceria-zirconia-based composite oxide and/or ceria-zirconia-based composite oxide), an additive (for example, binder), and the like. Next, as the step (iii), in the region (on the upstream coating layer) where the first catalyst coating layer is formed on the substrate where the second catalyst coating layer (the downstream coating layer and the upstream coating layer) has been formed, the slurry is coated by the wash coat method. After blowing off extra slurry with a blower or the like, for example, it is dried for usually one hour to three hours at usually 100°C to 150°C in the atmosphere to remove the solvent, and is fired for usually one hour to three hours at usually 450°C to 550°C in the atmosphere to form the first catalyst coating layer. Note that, in the method for producing the exhaust gas purification catalyst of the first embodiment of the present disclosure, as described above, the sequence of forming the catalyst coating layers is not limited. The catalyst coating layers may be formed in the sequence of the first catalyst coating layer, the upstream coating layer, and the downstream coating layer, in the sequence of the first catalyst coating layer, the downstream coating layer, and the upstream coating layer, in the sequence of the upstream coating layer, the downstream coating layer, and the first catalyst coating layer, in the sequence of the upstream coating layer, the first catalyst coating layer, and the downstream coating layer, or in the sequence of the downstream coating layer, the first catalyst coating layer, and the upstream coating layer.

When the exhaust gas purification catalyst of the second embodiment of the present disclosure is produced, first, as the step (ii), the catalyst coating layer slurry for the second catalyst coating layer is prepared. The catalyst coating layer slurry for the second catalyst coating layer includes the materials constituting the second catalyst coating layer, that is, the Rh precursor (for example, salt (for example, nitrate) containing Rh or the like), the three kinds of OSC materials having different specific surface areas (for example, alumina-ceria-zirconia-based composite oxide and/or ceria-zirconia-based composite oxide, or the like), and the solvent (for example, water, alcohol, a mixture of water and alcohol, or the like), as well as optionally further carrier particles (for example, alumina-zirconia-based composite oxide), an additive (for example, binder), and the like. Subsequently, as the step (iv), in the region where the second catalyst coating layer is formed on the substrate, the slurry is coated by the wash coat method. After blowing off extra slurry with a blower or the like, for example, it is dried for usually one hour to three hours at usually 100°C to 150°C in the atmosphere to remove the solvent, and is fired for usually one hour to three hours at usually 450°C to 550°C in the atmosphere to form the second catalyst coating layer. Subsequently, as the step (i), the catalyst coating layer slurry for the first catalyst coating layer is prepared. The catalyst coating layer slurry for the first catalyst coating layer includes the materials constituting the first catalyst coating layer, that is, the precursor of Pd and/or Pt as a catalyst metal (for example, salt (for example, nitrate) containing Pd and/or Pt or the like), and the solvent (for example, water, alcohol, a mixture of water and alcohol, or the like), as well as optionally carrier particles (for example, alumina-ceria-zirconia-based composite oxide and/or ceria-zirconia-based composite oxide, and the like), an additive (for example, binder), and the like. Subsequently, as the step (iii), in the region where the first catalyst coating layer is formed on the substrate where the second catalyst coating layer has been formed, the slurry is coated by the wash coat method. After blowing off extra slurry with a blower or the like, for example, it is dried for usually one hour to three hours at usually 100°C to 150°C in the atmosphere to remove the solvent, and is fired for usually one hour to three hours at usually 450°C to 550°C in the atmosphere to form the first catalyst coating layer. Note that, in the method for producing the exhaust gas purification catalyst of the second embodiment of the present disclosure, as described above, the sequence of forming the catalyst coating layers is not limited. The second catalyst coating layer may be formed after the first catalyst coating layer is formed.

(Usage of Exhaust Gas Purification Catalyst)

The exhaust gas purification catalyst of the present disclosure can significantly provide the effect in an exhaust gas purification performance in the rich atmosphere, and can be used as an exhaust gas purification catalyst that develops a high HC poisoning suppression effect usable even under an environment where the exhaust gas purification catalyst is possibly poisoned due to the excess HC and the like in the rich atmosphere attracted to the exhaust gas purification catalyst.

For example, the exhaust gas purification catalyst of the first embodiment of the present disclosure can be used as the S/C in a two-catalyst system that includes S/C and UF/C.

For example, the exhaust gas purification catalyst of the second embodiment of the present disclosure can be used as the UF/C in a two-catalyst system that includes S/C and UF/C.

[Examples]

While the following describes some Examples regarding the present disclosure, it is not intended to limit the present disclosure to those described in such Examples.

I. First Embodiment

I-1. Used Material

Material 1 ($Al_2O_3$)

: $La_2O_3$-$Al_2O_3$ composite
($Al_2O_3$: 99 weight%)
($La_2O_3$: 1 weight%)

Material 2 (high specific surface area OSC material)

: $Al_2O_3$-$CeO_2$-$ZrO_2$-based composite oxide (ACZ)
($Al_2O_3$: 30 weight%)
($CeO_2$: 20 weight%)
($ZrO_2$: 44 weight%)
($Nd_2O_3$: 2 weight%)
($La_2O_3$: 2 weight%)
($Y_2O_3$: 2 weight%)
BET specific surface area: 65 m$^2$/g

Material 3 (medium specific surface area OSC material)

: $Al_2O_3$-$CeO_2$-$ZrO_2$-based composite oxide (ACZ)
($Al_2O_3$: 30 weight%)
($CeO_2$: 20 weight%)
($ZrO_2$: 44 weight%)
($Nd_2O_3$: 2 weight%)
($La_2O_3$: 2 weight%)
($Y_2O_3$: 2 weight%)
BET specific surface area: 35 m$^2$/g

Material 4 (low specific surface area OSC material)

: $CeO_2$-$ZrO_2$-based composite oxide having a pyrochlore structure ($Ce_2Zr_2O_7$)
($CeO_2$: 51.5 weight%)
($ZrO_2$: 45.5 weight%)
($Pr_6O_{11}$: 3 weight%)
(prepared based on JP 2018-038999 A)
BET specific surface area: 1.5 m$^2$/g

Material 5 (AZ)

: $Al_2O_3$-$ZrO_2$-based composite oxide (AZ)
($Al_2O_3$: 30 weight%)
($ZrO_2$: 60 weight%)
($La_2O_3$: 5 weight%)
($Y_2O_3$: 5 weight%)

Material 6 (CZ)

: $CeO_2$-$ZrO_2$-based composite oxide (CZ)
($CeO_2$: 40 weight%)
($ZrO_2$: 50 weight%)
($La_2O_3$: 5 weight%)
($Y_2O_3$: 5 weight%)

Material 7 (Ba)
: Barium sulfate
Material 8 (Rh)
: Rhodium nitrate aqueous solution
Rh concentration: 2.75 weight%

Material 9 (Pd)
: Palladium nitrate aqueous solution
Pd concentration: 8.4 weight%

Substrate

: Cordierite honeycomb substrate of 875 cc (600 cell hexagons, wall thickness of 2 mil, whole length of 105 mm)

I-2. Preparation of Exhaust Gas Purification Catalyst

Comparative Example 1

First, Material 8 (Rh) and Material 5 (AZ) were introduced into distilled water while being stirred, and the obtained suspension was dried at 120°C for two hours and further fired at 500°C for two hours to prepare AZ supporting Rh (Rh/AZ).

Next, Rh/AZ, Material 1 ($Al_2O_3$), Material 2 (high specific surface area OSC material), Material 4 (low specific surface area OSC material), Material 5 (AZ), and $Al_2O_3$-based binder were introduced into distilled water while being stirred to prepare a suspended slurry 1.

Subsequently, the prepared slurry 1 was casted to the substrate and the excess was blown off with a blower, and thus, the materials were coated on the wall surface of the substrate and a precursor layer of a downstream coating layer was prepared. At this time, for the respective coating materials, with respect to 1 L of a capacity of a portion where the downstream coating layer was to be applied on the substrate, the contents of the respective coating materials were set in such a way that Material 8 became 0.40 g in a metal conversion of Rh (0.40 g/L-zone), Material 1 became 40 g (40 g/L-zone), Material 2 became 75 g (75 g/L-zone), Material 4 became 28 g (28 g/L-zone), and Material 5 became 40 g (40 g/L-zone). The coat length of the precursor layer of the downstream coating layer was adjusted to occupy 65% of the whole length of the substrate in an exhaust gas purification catalyst from an end portion in a downstream side with respect to an exhaust gas flow direction in the exhaust gas purification catalyst.

Finally, after the water content was reduced for two hours with a dryer kept at 120°C, firing was performed for two hours with an electric furnace kept at 500°C to prepare the downstream coating layer (rear portion).

Subsequently, Material 8 (Rh) and Material 5 (AZ) were introduced into distilled water while being stirred, and the obtained suspension was dried at 120°C for two hours and further fired at 500°C for two hours to prepare AZ supporting Rh (Rh/AZ).

Next, Rh/AZ, Material 1 ($Al_2O_3$), Material 2 (high specific surface area OSC material), Material 4 (low specific surface area OSC material), and $Al_2O_3$-based binder were introduced into distilled water while being stirred to prepare a suspended slurry 2.

Subsequently, the prepared slurry 2 was casted to the substrate on which the downstream coating layer was formed from an end surface opposite of the end surface where the downstream coating layer was formed and the excess was blown off with a blower, and thus, the materials were coated on the wall surface of the substrate and a precursor layer of an upstream coating layer was prepared. At this time, for the respective coating materials, with respect to 1 L of a capacity of a portion where the upstream coating layer was to be applied on the substrate, the contents of the respective coating materials were set in such a way that Material 8 became 0.15 g in a metal conversion of Rh (0.15 g/L-zone), Material 1 became 20 g (20 g/L-zone), Material 2 became 15 g (15 g/L-zone), Material 4 became 8 g (8 g/L-zone), and Material 5 became 20 g (20 g/L-zone). The coat length of the precursor layer of the upstream coating layer was adjusted to occupy 55% of the whole length of the substrate in the exhaust gas purification catalyst from an end portion in an upstream side with respect to the exhaust gas flow direction in the exhaust gas purification catalyst.

Finally, after the water content was reduced for two hours with a dryer kept at 120°C, firing was performed for two hours with an electric furnace kept at 500°C to prepare the upstream coating layer (front portion).

Subsequently, similarly to the above, Material 9 (Pd), Material 1 ($Al_2O_3$), Material 6 (CZ), Material 7 (Ba), and $Al_2O_3$-based binder were introduced into distilled water while being stirred to prepare a suspended slurry 3.

Next, the prepared slurry 3 was casted to the substrate on which the downstream coating layer and the upstream coating layer that were a second catalyst coating layer were formed from the same end surface as the end surface where the upstream coating layer was formed and the excess was blown off with a blower, and thus, the materials were coated on the wall surface of the substrate and a precursor layer of a first catalyst coating layer was prepared. At this time, for the respective coating materials, with respect to 1 L of the capacity of the portion where the first catalyst coating layer was to be applied on the substrate, the contents of the respective coating materials were set in such a way that Material 9 became 5 g in a metal conversion of Pd (5 g/L-zone), Material 1 became 25 g (25 g/L-zone), Material 6 became 75 g (75 g/L-zone), and Material 7 became 13 g (13 g/L-zone). The coat length of the precursor layer of the first catalyst coating layer was adjusted to occupy 30% of the whole length of the substrate in the exhaust gas purification catalyst from the end portion in the upstream side with respect to the exhaust gas flow direction in the exhaust gas purification catalyst.

Finally, after the water content was reduced for two hours with a dryer kept at 120°C, firing was performed for two hours with an electric furnace kept at 500°C to prepare the first catalyst coating layer (front portion), and finally the exhaust gas purification catalyst was prepared.

Comparative Example 2

An exhaust gas purification catalyst was prepared similarly to Comparative Example 1 except as follows. In Comparative Example 1, the total amount (75 g/L-zone) of Material 2 in the slurry 1 was changed to Material 3 (medium specific surface area OSC material) (75 g/L-zone), and the total amount (15 g/L-zone) of Material 2 in the slurry 2 was changed to Material 3 (medium specific surface area OSC material) (15 g/L-zone).

Example 1

An exhaust gas purification catalyst was prepared similarly to Comparative Example 1 except as follows. In Comparative Example 1, the total amount (75 g/L-zone) of Material 2 in the slurry 1 was changed to Material 3 (medium specific surface area OSC material) (75 g/L-zone), the amount of Material 4 added to the slurry 1 was changed to adjust such that the total amount of Material 4 in the slurry 1 became 8 g/L-zone, and the amount of Material 2 added to the slurry 2 was changed to adjust such that the total amount of Material 2 in the slurry 2 became 75 g/L-zone.

Example 2

An exhaust gas purification catalyst was prepared similarly to Comparative Example 1 except as follows. In Comparative Example 1, the total amount (75 g/L-zone) of Material 2 in the slurry 1 was changed to Material 3 (medium specific surface area OSC material) (60 g/L-zone), and the amount of Material 2 added to the slurry 2 was changed to adjust such that the total amount of Material 2 in the slurry 2 became 30 g/L-zone.

Example 3

An exhaust gas purification catalyst was prepared similarly to Comparative Example 1 except as follows. In Comparative Example 1, the total amount (75 g/L-zone) of Material 2 in the slurry 1 was changed to Material 3 (medium specific surface area OSC material) (25 g/L-zone), the amount of Material 4 added to the slurry 1 was changed to adjust such that the total amount of Material 4 in the slurry 1 became 33 g/L-zone, the amount of Material 2 added to the slurry 2 was changed to adjust such that the total amount of Material 2 in the slurry 2 became 30 g/L-zone, and the amount of Material 4 added to the slurry 2 was changed to adjust such that the total amount of Material 4 in the slurry 2 became 18 g/L-zone.

Example 4

An exhaust gas purification catalyst was prepared similarly to Comparative Example 1 except as follows. In Comparative Example 1, the total amount (75 g/L-zone) of Material 2 in the slurry 1 was changed to Material 3 (medium specific surface area OSC material) (25 g/L-zone), the amount of Material 4 added to the slurry 1 was changed to adjust such that the total amount of Material 4 in the slurry 1 became 18 g/L-zone, the amount of Material 2 added to the slurry 2 was changed to adjust such that the total amount of Material 2 in the slurry 2 became 75 g/L-zone, and the amount of Material 4 added to the slurry 2 was changed to adjust such that the total amount of Material 4 in the slurry 2 became 18 g/L-zone.

Comparative Example 3

An exhaust gas purification catalyst was prepared similarly to Comparative Example 1 except that the order of forming the catalyst coating layers was changed from (downstream coating layer → upstream coating layer → first catalyst coating layer) to (first catalyst coating layer → downstream coating layer → upstream coating layer) in Comparative Example 1.

Example 5

An exhaust gas purification catalyst was prepared similarly to Example 3 except that the order of forming the catalyst coating layers was changed from (downstream coating layer → upstream coating layer → first catalyst coating layer) to (first catalyst coating layer → downstream coating layer → upstream coating layer) in Example 3.

Table 1 summarizes the catalyst compositions of the OSC materials in the upstream coating layers and the downstream coating layers in the exhaust gas purification catalysts of Comparative Examples 1 to 3 and Examples 1 to 5.

[Table 1]

| Table 1. List of Preparation Level of Examples and Comparative Examples | | | | | | |
|---|---|---|---|---|---|---|
| | Upstream Coat Layer (Upper Tier) | | | Downstream Coat Layer (Lower Tier) | | Unit: g/L-zone |
| | Material 2 High Specific Surface Area OSC Material | Material 3 Medium Specific Surface Area OSC Material | Material 4 Low Specific Surface Area OSC Material | Material 2 | Material 3 | Material 4 |
| Comparative Example 1 | 15 | 0 | 8 | 75 | 0 | 28 |
| Comparative Example 2 | 0 | 15 | 8 | 0 | 75 | 28 |
| Example 1 | 75 | 0 | 8 | 0 | 75 | 8 |
| Example 2 | 30 | 0 | 8 | 0 | 60 | 28 |
| Example 3 | 30 | 0 | 18 | 0 | 25 | 33 |
| Example 4 | 75 | 0 | 18 | 0 | 25 | 18 |
| Comparative Example 3 | 15 | 0 | 8 | 75 | 0 | 28 |
| Example 5 | 30 | 0 | 18 | 0 | 25 | 33 |

Table 2 summarizes the proportions of ceria occupied by the respective materials with respect to the whole materials in the exhaust gas purification catalysts of Comparative Examples 1 to 3 and Examples 1 to 5. Here, the sum of all the amounts (proportions) of ceria in the high specific surface area OSC material, the medium specific surface area OSC material, and the low specific surface area OSC material becomes 100 weight%. However, in Table 2, since the proportions of ceria of the respective OSC materials in the three OSC materials are indicated by three significant figures, the sum of all the proportions of ceria becomes $100 \pm 0.1$ weight%.

[Table 2]

| Table 2. Ceria Proportion Occupied by Each Material with respect to Whole Materials | | | |
|---|---|---|---|
| | Proportion of Use Occupied by Each Material ($CeO_2$ Conversion) | | |
| | High Specific Surface Area OSC Material (%) | Medium Specific Surface Area OSC Material (%) | Low Specific Surface Area OSC Material (%) |
| Comparative Example 1 | 49.5 | 0.0 | 50.5 |
| Comparative Example 2 | 0.0 | 49.5 | 50.5 |
| Example 1 | 36.0 | 42.5 | 21.5 |
| Example 2 | 14.5 | 34.3 | 51.2 |

(continued)

| Table 2. Ceria Proportion Occupied by Each Material with respect to Whole Materials | | | |
|---|---|---|---|
| | Proportion of Use Occupied by Each Material (CeO$_2$ Conversion) | | |
| | High Specific Surface Area OSC Material (%) | Medium Specific Surface Area OSC Material (%) | Low Specific Surface Area OSC Material (%) |
| Example 3 | 14.5 | 14.3 | 71.1 |
| Example 4 | 36.5 | 14.4 | 49.2 |
| Comparative Example 3 | 49.5 | 0.0 | 50.5 |
| Example 5 | 14.5 | 14.3 | 71.1 |

I-3. Durability Test

The following durability test was performed using an actual engine for the exhaust gas purification catalysts of Comparative Examples 1 to 3 and Examples 1 to 5.

The test was performed by mounting each of the exhaust gas purification catalysts on the exhaust system of a V8 engine and repeatedly flowing exhaust gases in respective atmospheres of stoichiometric and lean at each certain period of time (ratio of 3:1) at a catalyst bed temperature of 950°C and over 50 hours.

I-4. Performance Evaluation

The following performance evaluations were performed using actual engines for the exhaust gas purification catalysts of Comparative Examples 1 to 3 and Examples 1 to 5 that have undergone I-3. Durability Test.

I-4-1. OSC Evaluation

Each of the exhaust gas purification catalysts was mounted on the exhaust system of an L4 engine, and an A/F feedback control was performed such that the A/F became 14.1 and 15.1 under conditions of Ga = 10 g/s and 500°C (low temperature) or 750°C (high temperature). From the difference between a stoichiometric point and an A/F sensor output, an excess or shortage of oxygen was calculated from the following formula, and the maximum oxygen storage amount at Ga = 10 g/s and 500°C (low temperature) or 750°C (high temperature) was evaluated as OSC.

$$OSC \ (g) = 0.23 \times \Delta A/F \times \text{injected fuel amount}$$

I-4-2. NOx Conversion Rate in Rich Atmosphere

Each of the exhaust gas purification catalysts was mounted on the exhaust system of an L4 engine, an exhaust gas with an air-fuel ratio (A/F) of 14.4 was supplied, and a NOx conversion rate at Ga = 30/s and 550°C was measured. The NOx conversion rate at a three-minute duration was evaluated as a NOx conversion activity in a rich atmosphere.

I-5. Evaluation Result

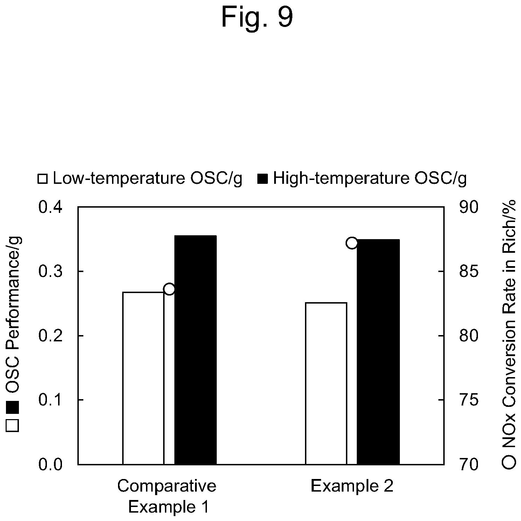

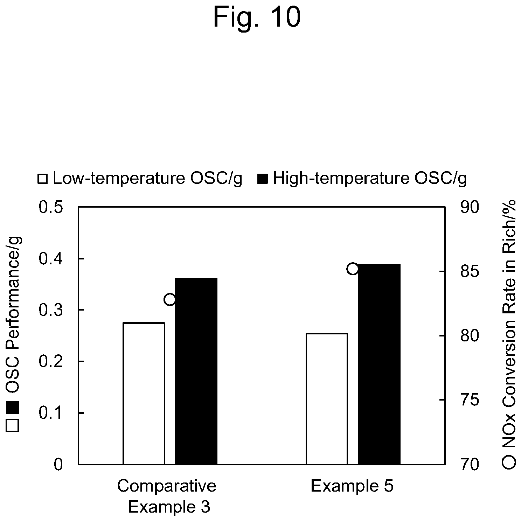

Table 3 and FIGS. 9 and 10 show the results.

[Table 3]

| Table 3. List of Evaluation Results | | | |
|---|---|---|---|
| | Low-temperature OSC/g | High-temperature OSC/g | NOx Conversion Rate in Rich/% |
| Comparative Example 1 | 0.267 | 0.355 | 83.6 |
| Comparative Example 2 | 0.223 | 0.362 | 85.8 |
| Example 1 | 0.253 | 0.324 | 86.1 |

(continued)

| Table 3. List of Evaluation Results | | | |
|---|---|---|---|
| | Low-temperature OSC/g | High-temperature OSC/g | NOx Conversion Rate in Rich/% |
| Example 2 | 0.251 | 0.349 | 87.2 |
| Example 3 | 0.245 | 0.392 | 85.5 |
| Example 4 | 0.265 | 0.368 | 84.6 |
| Comparative Example 3 | 0.275 | 0.361 | 82.8 |
| Example 5 | 0.254 | 0.388 | 85.2 |

From Table 3, by comparing Comparative Examples 1 and 2 with Examples 1 to 4, it was found as follows. In Examples 1 to 4, the second catalyst coating layer includes the three kinds of OSC materials having different specific surface areas, that is, the high specific surface area OSC material, the medium specific surface area OSC material, and the low specific surface area OSC material. In some embodiments, the upstream coating layer includes the high specific surface area OSC material and the low specific surface area OSC material, and the downstream coating layer includes the medium specific surface area OSC material and the low specific surface area OSC material. This enables to obtain a high NOx conversion rate under a rich atmosphere while maintaining OSC performances at a high temperature and a low temperature, without generating a deficient performance. That is, the three performances can be maintained in a well-balanced manner at a high level. For example, from FIG. 9, in Example 2, the NOx conversion rate that was deficient in Comparative Example 1 is improved while the OSC at the low temperature and the OSC at the high temperature are maintained.

Accordingly, it was found that the inclusion of all of the high specific surface area OSC material, the medium specific surface area OSC material, and the low specific surface area OSC material in the second catalyst coating layer enables to have an OSC performance and a NOx conversion rate in a compatible manner.

In addition, from Table 3 and FIG. 10, by comparing Comparative Example 3 with Example 5, it is found that the effect of the present disclosure can be obtained even when the positions of the first catalyst coating layer and the upstream coating layer are interchanged, that is, the upstream coating layer is disposed on the first catalyst coating layer.

II. Second Embodiment

II-1. Used Material

Material 1 ($Al_2O_3$)

: $La_2O_3$-$Al_2O_3$ composite

($Al_2O_3$: 99 weight%)

($La_2O_3$: 1 weight%)

Material 2 (high specific surface area OSC material)

: $Al_2O_3$-$CeO_2$-$ZrO_2$-based composite oxide (ACZ)

($Al_2O_3$: 30 weight%)

($CeO_2$: 20 weight%)

($ZrO_2$: 44 weight%)

($Nd_2O_3$: 2 weight%)

($La_2O_3$: 2 weight%)

($Y_2O_3$: 2 weight%)
BET specific surface area: 65 $m^2$/g

Material 3 (medium specific surface area OSC material)

: $Al_2O_3$-$CeO_2$-$ZrO_2$-based composite oxide (ACZ)
($Al_2O_3$: 30 weight%)
($CeO_2$: 20 weight%)
($ZrO_2$: 44 weight%)
($Nd_2O_3$: 2 weight%)
($La_2O_3$: 2 weight%)
($Y_2O_3$: 2 weight%)
BET specific surface area: 35 $m^2$/g

Material 4 (low specific surface area OSC material)

: $CeO_2$-$ZrO_2$-based composite oxide having a pyrochlore structure ($Ce_2Zr_2O_7$)
($CeO_2$: 51.5 weight%)
($ZrO_2$: 45.5 weight%)
($Pr_6O_{11}$: 3 weight%)
(prepared based on JP 2018-038999 A)
BET specific surface area: 1.5 $m^2$/g

Material 7 (Ba)
: Barium sulfate
Material 8 (Rh)
: Rhodium nitrate aqueous solution
Rh concentration: 2.75 weight%
Material 10 (high specific surface area OSC material)

: $CeO_2$-$ZrO_2$-based composite oxide (CZ)
(CeOz: 20 weight%)
($ZrO_2$: 70 weight%)
($La_2O_3$: 5 weight%)
($Y_2O_3$: 5 weight%)
BET specific surface area: 80 $m^2$/g

Material 11 (medium specific surface area OSC material)

: $CeO_2$-$ZrO_2$-based composite oxide (CZ)

($CeO_2$: 20 weight%)

($ZrO_2$: 70 weight%)

($La_2O_3$: 5 weight%)

($Y_2O_3$: 5 weight%)
BET specific surface area: 35 $m^2$/g

Material 12 (Pt)
: Platinum nitrate aqueous solution
Pt concentration: 8.2 weight%

Material 13 (AZ)

: $Al_2O_3$-$ZrO_2$-based composite oxide (AZ)

(Al$_2$O$_3$: 30 weight%)

(ZrO$_2$: 60 weight%)

(Nd$_2$O$_3$: 2 weight%)

(La$_2$O$_3$: 4 weight%)

(Y$_2$O$_3$: 4 weight%)

Substrate
: Cordierite honeycomb substrate of 875 cc (600 cell hexagons, wall thickness of 2 mil, whole length of 105 mm)

II-2. Preparation of Exhaust Gas Purification Catalyst

Comparative Example 4

First, Material 8 (Rh) and Material 13 (AZ) were introduced into distilled water while being stirred, and the obtained suspension was dried at 120°C for two hours and further fired at 500°C for two hours to prepare AZ supporting Rh (Rh/AZ).
Next, Rh/AZ, Material 1 (Al$_2$O$_3$), Material 2 (high specific surface area OSC material), Material 4 (low specific surface area OSC material), and Al$_2$O$_3$-based binder were introduced into distilled water while being stirred to prepare a suspended slurry 1.
Subsequently, the prepared slurry 1 was casted to the substrate and the excess was blown off with a blower, and thus, the materials were coated on the wall surface of the substrate and a precursor layer of a second catalyst coating layer was prepared. At this time, for the respective coating materials, with respect to 1 L of a capacity of a portion where the second catalyst coating layer was to be applied on the substrate, the contents of the respective coating materials were set in such a way that Material 1 became 40 g (40 g/L-zone), Material 2 became 60 g (60 g/L-zone), Material 4 became 15 g (15 g/L-zone), Material 13 became 60 g (60 g/L-zone), and Material 8 became 0.18 g in a metal conversion of Rh (0.18 g/L-zone). The coat length of the precursor layer of the second catalyst coating layer was adjusted to occupy 80% of the whole length of the substrate in an exhaust gas purification catalyst from an end portion in a downstream side with respect to an exhaust gas flow direction in the exhaust gas purification catalyst.
Finally, after the water content was reduced for two hours with a dryer kept at 120°C, firing was performed for two hours with an electric furnace kept at 500°C to prepare the second catalyst coating layer (rear portion).
Subsequently, similarly to the above, Material 12 (Pt), Material 1 (Al$_2$O$_3$), Material 10 (high specific surface area OSC material), Material 7 (Ba), and Al$_2$O$_3$-based binder were introduced into distilled water while being stirred to prepare a suspended slurry 2.
Next, the prepared slurry 2 was casted to the substrate on which the second catalyst coating layer was formed from an end surface opposite of the end surface where the second catalyst coating layer was formed and the excess was blown off with a blower, and thus, the materials were coated on the wall surface of the substrate and a precursor layer of a first catalyst coating layer was prepared. At this time, for the respective coating materials, with respect to 1 L of a capacity of a portion where the first catalyst coating layer was to be applied on the substrate, the contents of the respective coating materials were set in such a way that Material 12 became 0.7 g in a metal conversion of Pt (0.7 g/L-zone), Material 1 became 35 g (35 g/L-zone), Material 10 became 30 g (30 g/L-zone), and Material 7 became 5 g (5 g/L-zone). The coat length of the precursor layer of the first catalyst coating layer was adjusted to occupy 35% of the whole length of the substrate in the exhaust gas purification catalyst from an end portion in an upstream side with respect to the exhaust gas flow direction in the exhaust gas purification catalyst.
Finally, after the water content was reduced for two hours with a dryer kept at 120°C, firing was performed for two hours with an electric furnace kept at 500°C to prepare the first catalyst coating layer (front portion), and finally the exhaust gas purification catalyst was prepared.

Example 6

An exhaust gas purification catalyst was prepared similarly to Comparative Example 4 except that in Comparative Example 4, 10 g/L-zone in Material 2 (total amount: 60 g/L-zone) in the slurry 1 was changed to Material 3 (medium specific surface area OSC material) (total amount: 10 g/L-zone).

Example 7

An exhaust gas purification catalyst was prepared similarly to Comparative Example 4 except that in Comparative Example 4, 20 g/L-zone in Material 2 (total amount: 60 g/L-zone) in the slurry 1 was changed to Material 3 (medium specific surface area OSC material) (total amount: 20 g/L-zone).

Example 8

An exhaust gas purification catalyst was prepared similarly to Comparative Example 4 except that in Comparative Example 4, 30 g/L-zone in Material 2 (total amount: 60 g/L-zone) in the slurry 1 was changed to Material 3 (medium specific surface area OSC material) (total amount: 30 g/L-zone).

Example 9

An exhaust gas purification catalyst was prepared similarly to Comparative Example 4 except that in Comparative Example 4, 40 g/L-zone in Material 2 (total amount: 60 g/L-zone) in the slurry 1 was changed to Material 3 (medium specific surface area OSC material) (total amount: 40 g/L-zone).

Comparative Example 5

An exhaust gas purification catalyst was prepared similarly to Comparative Example 4 except that in Comparative Example 4, the total amount (60 g/L-zone) of Material 2 in the slurry 1 was changed to Material 3 (medium specific surface area OSC material) (total amount: 60 g/L-zone).

Comparative Example 6

An exhaust gas purification catalyst was prepared similarly to Comparative Example 4 except that in Comparative Example 4, the total amount (60 g/L-zone) of Material 2 in the slurry 1 was changed to Material 10 (high specific surface area OSC material) (total amount: 60 g/L-zone).

Example 10

An exhaust gas purification catalyst was prepared similarly to Comparative Example 6 except that in Comparative Example 6, 30 g/L-zone in Material 10 (total amount: 60 g/L-zone) in the slurry 1 was changed to Material 11 (medium specific surface area OSC material) (total amount: 30 g/L-zone).

Table 4 summarizes the catalyst compositions of the OSC materials in the second catalyst coating layers in the exhaust gas purification catalysts of Comparative Examples 4 to 6 and Examples 6 to 10.

[Table 4]

| Table 4. List of Preparation Level of Examples and Comparative Examples | | | |
|---|---|---|---|
| Sample | Amount of Each Material Used in Second Catalyst Coating Layer/g/L$^{-1}$-zone | | |
| | High Specific Surface Area OSC Material | Medium Specific Surface Area OSC Material | Low Specific Surface Area OSC Material |
| Comparative Example 4 | 60 | 0 | 15 |
| Example 6 | 50 | 10 | 15 |
| Example 7 | 40 | 20 | 15 |
| Example 8 | 30 | 30 | 15 |
| Example 9 | 20 | 40 | 15 |
| Comparative Example 5 | 0 | 60 | 15 |
| Comparative Example δ | 60 | 0 | 15 |

(continued)

| Table 4. List of Preparation Level of Examp les and Comparati ve Examples | | | |
|---|---|---|---|
| Sample | Amount of Each Material Used in Second Catalyst Coating Layer/g/L$^{-1}$-zone | | |
| | High Specific Surface Area OSC Material | Medium Specific Surface Area OSC Material | Low Specific Surface Area OSC Material |
| Example 10 | 30 | 30 | 15 |

II-3. Durability Test

The following durability test was performed using an actual engine for the exhaust gas purification catalysts of Comparative Examples 4 to 6 and Examples 6 to 10.

The test was performed by mounting each of the exhaust gas purification catalysts on the exhaust system of a V8 engine and repeatedly flowing exhaust gases in respective atmospheres of stoichiometric and lean at each certain period of time (ratio of 3:1) at a catalyst bed temperature of 900°C and over 50 hours.

II-4. Performance Evaluation

The following performance evaluations were performed using actual engines for the exhaust gas purification catalysts of Comparative Examples 4 to 6 and Examples 6 to 10 that have undergone II-3. Durability Test.

II-4-1. OSC Evaluation

Each of the exhaust gas purification catalysts was mounted on the exhaust system of an L4 engine, and an A/F feedback control was performed such that the A/F became 14.1 and 15.1 under conditions of Ga = 10 g/s and 500°C. From the difference between a stoichiometric point and an A/F sensor output, an excess or shortage of oxygen was calculated from the following formula, and the maximum oxygen storage amount at Ga = 10 g/s and 500°C was evaluated as OSC.

$$OSC\ (g) = 0.23 \times \Delta A/F \times injected\ fuel\ amount$$

II-4-2. NOx Conversion Rate in Rich Atmosphere

Each of the exhaust gas purification catalysts was mounted on the exhaust system of an L4 engine, an exhaust gas with an air-fuel ratio (A/F) of 14.4 was supplied, and a NOx conversion rate at Ga = 30/s and 500°C was measured. The NOx conversion rate at a three-minute duration was evaluated as a NOx conversion activity in a rich atmosphere.

II-5. Evaluation Result

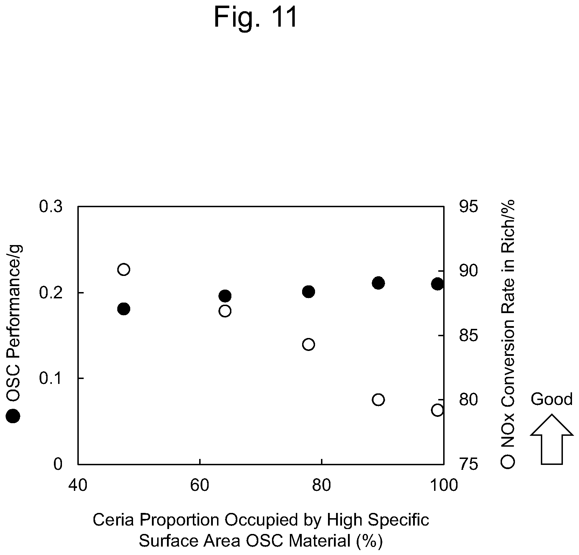

Table 5 and FIGS. 11 to 13 show the results.

[Table 5]

| Table 5. List of Evaluation Results | | |
|---|---|---|
| | OSC Performance/g | NOx Conversion Rate in Rich (%) |
| Comparative Example 4 | 0.210 | 79.2 |
| Example 6 | 0.211 | 80.0 |
| Example 7 | 0.201 | 84.3 |
| Example 8 | 0.196 | 86.9 |
| Example 9 | 0.181 | 90.1 |
| Comparative Example 5 | 0.144 | 90.4 |
| Comparative Example 6 | 0.183 | 78.8 |

(continued)

| Table 5. List of Evaluation Results | | |
| --- | --- | --- |
| | OSC Performance/g | NOx Conversion Rate in Rich (%) |
| Example 10 | 0.163 | 88.7 |

From Table 5 and FIG. 11, by comparing Comparative Example 4 with Examples 6 to 9, it was found that the addition of the medium specific surface area OSC material in addition to the high specific surface area OSC material and the low specific surface area OSC material in the second catalyst coating layer enables to improve a NOx conversion rate under a rich atmosphere while maintaining an OSC performance. This is because a part of the high specific surface area OSC material is replaced with the medium specific surface area OSC material, thereby decreasing the HC amount accumulating on the OSC materials to easily maintain precious metal activities.

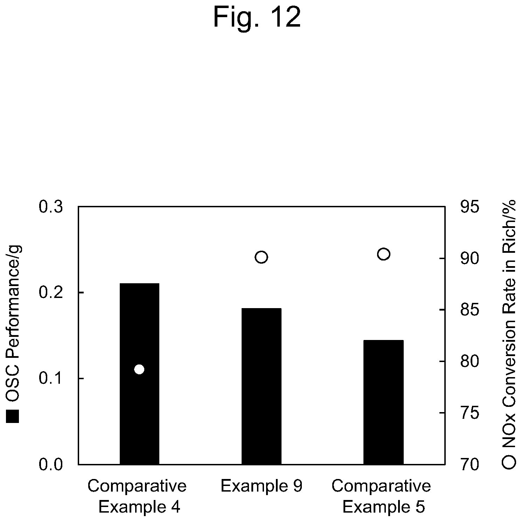

Meanwhile, from Table 5 and FIG. 12, by comparing Comparative Example 4 or 5 with Example 9, it was found as follows. In the second catalyst coating layer, when the OSC materials are constituted only of the high specific surface area OSC material and the low specific surface area OSC material, the OSC performance can be highly maintained, whereas the NOx conversion rate under a rich atmosphere is decreased. When the OSC materials are constituted only of the medium specific surface area OSC material and the low specific surface area OSC material, the NOx conversion rate under a rich atmosphere can be highly maintained, whereas the OSC performance is decreased.

Accordingly, it was found that the inclusion of all of the high specific surface area OSC material, the medium specific surface area OSC material, and the low specific surface area OSC material in the second catalyst coating layer enables to have an OSC performance and a NOx conversion rate in a compatible manner.

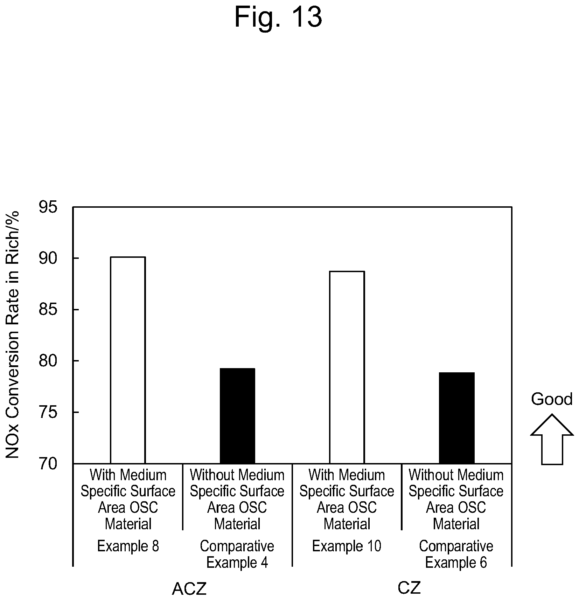

In addition, from Table 5 and FIG. 13, by comparing the relationship between Comparative Example 4 and Example 8 and the relationship between Comparative Example 6 and Example 10, it was found that not only ACZ, but also CZ can be used as the high specific surface area OSC material and the medium specific surface area OSC material.

DESCRIPTION OF SYMBOLS

1    Substrate
2    Upstream coating layer
3    Downstream coating layer
4    First catalyst coating layer
5    Second catalyst coating layer

**Claims**

1. An exhaust gas purification catalyst comprising:

   a substrate (1); and
   a catalyst coating layer coated on the substrate (1),
   wherein the catalyst coating layer includes a first catalyst coating layer (4) containing Pd and/or Pt as a catalyst metal and a second catalyst coating layer (5) containing Rh as a catalyst metal,
   wherein the first catalyst coating layer (4) is formed from an end portion in an upstream side with respect to an exhaust gas flow direction in the exhaust gas purification catalyst, and
   wherein the second catalyst coating layer (5) includes a high specific surface area OSC material having a specific surface area of more than 40 $m^2$/g, a medium specific surface area OSC material having a specific surface area of 4 $m^2$/g to 40 $m^2$/g, and a low specific surface area OSC material having a specific surface area of less than 4 $m^2$/g.

2. The exhaust gas purification catalyst according to claim 1,
   wherein each of the high specific surface area OSC material and the medium specific surface area OSC material independently contains an alumina-ceria-zirconia-based composite oxide or a ceria-zirconia-based composite oxide, and the low specific surface area OSC material contains a ceria-zirconia-based composite oxide.

3. The exhaust gas purification catalyst according to claim 2,
wherein the low specific surface area OSC material contains a ceria-zirconia-based composite oxide having a pyrochlore structure.

4. The exhaust gas purification catalyst according to any one of claims 1-3,
wherein the second catalyst coating layer (5) has an upstream coating layer (2) formed from the end portion in the upstream side with respect to the exhaust gas flow direction in the exhaust gas purification catalyst and a downstream coating layer (3) formed from an end portion in a downstream side with respect to the exhaust gas flow direction in the exhaust gas purification catalyst.

5. The exhaust gas purification catalyst according to claim 4,
wherein the first catalyst coating layer (4) has a width of 20% to 50% of a whole length of the substrate (1) in the exhaust gas purification catalyst, the upstream coating layer (2) has a width of 30% to 70% of the whole length of the substrate (1) in the exhaust gas purification catalyst, and the downstream coating layer (3) has a width of 30% to 70% of the whole length of the substrate (1) in the exhaust gas purification catalyst.

6. The exhaust gas purification catalyst according to claim 4,
wherein the first catalyst coating layer (4) is disposed on the upstream coating layer (2).

7. The exhaust gas purification catalyst according to claim 4,
wherein the first catalyst coating layer (4) is disposed under the upstream coating layer (2).

8. The exhaust gas purification catalyst according to claim 4,
wherein the upstream coating layer (2) includes the high specific surface area OSC material and the low specific surface area OSC material, and the downstream coating layer (3) includes the medium specific surface area OSC material and the low specific surface area OSC material.

9. The exhaust gas purification catalyst according to claim 8,

wherein the high specific surface area OSC material has ceria in an amount of 10 weight% to 40 weight% with respect to a total weight of ceria in the upstream coating layer and the downstream coating layer (3) as the second catalyst coating layer (5),
wherein the medium specific surface area OSC material has ceria in an amount of 10 weight% to 40 weight% with respect to the total weight of ceria in the upstream coating layer (2) and the downstream coating layer (3) as the second catalyst coating layer (5),
wherein the high specific surface area OSC material and the medium specific surface area OSC material have ceria in an amount of 60 weight% or less with respect to the total weight of ceria in the upstream coating layer (2) and the downstream coating layer (3) as the second catalyst coating layer (5),
wherein the low specific surface area OSC material has ceria in an amount of 40 weight% to 80 weight% with respect to the total weight of ceria in the upstream coating layer (2) and the downstream coating layer (3) as the second catalyst coating layer (5), and
wherein, a sum of all the amounts of ceria in the high specific surface area OSC material, the medium specific surface area OSC material, and the low specific surface area OSC material becomes 100 weight%.

10. The exhaust gas purification catalyst according to claim 4,
wherein the first catalyst coating layer (4) includes Pd as a catalyst metal.

11. The exhaust gas purification catalyst according to claim 4,
wherein the exhaust gas purification catalyst is for use as S/C (startup catalyst) in a two-catalyst system.

12. The exhaust gas purification catalyst according to any one of claims 1-3,
wherein the second catalyst coating layer (5) is formed from an end portion in a downstream side with respect to the exhaust gas flow direction in the exhaust gas purification catalyst.

13. The exhaust gas purification catalyst according to claim 12,
wherein the first catalyst coating layer (4) has a width of 15% to 50% of a whole length of the substrate in the exhaust gas purification catalyst, and the second catalyst coating layer (5) has a width of 65% to 95% of the whole length of the substrate in the exhaust gas purification catalyst.

**14.** The exhaust gas purification catalyst according to claim 12,
wherein the first catalyst coating layer (4) contains Pt as a catalyst metal.

**15.** The exhaust gas purification catalyst according to claim 12,
wherein the exhaust gas purification catalyst is for use as UF/C (underfloor catalyst) in a two-catalyst system.


**Patentansprüche**

**1.** Abgasreinigungskatalysator, umfassend:

ein Substrat (1); und
eine katalytische Beschichtungsschicht, die auf das Substrat (1) gestrichen ist,
wobei die katalytische Beschichtungsschicht eine erste katalytische Beschichtungsschicht (4), die Pd und/oder Pt als ein Katalysatormetall enthält, und eine zweite katalytische Beschichtungsschicht (5) beinhaltet, die Rh als ein Katalysatormetall enthält,
wobei die erste katalytische Beschichtungsschicht (4) von einem Endabschnitt an einer stromaufwärtigen Seite in Bezug auf eine Abgasströmungsrichtung in dem Abgasreinigungskatalysator ausgebildet ist, und
wobei die zweite katalytische Beschichtungsschicht (5) ein OSC-Material mit einem hohen spezifischen Oberflächenbereich mit einem spezifischen Oberflächenbereich von mehr als 40 m$^2$/g, ein OSC-Material mit einem mittleren spezifischen Oberflächenbereich mit einem spezifischen Oberflächenbereich von 4 m$^2$/g bis 40 m$^2$/g und ein OSC-Material mit einem niedrigen spezifischen Oberflächenbereich mit einem spezifischen Oberflächenbereich von weniger als 4 m$^2$/g beinhaltet.

**2.** Abgasreinigungskatalysator nach Anspruch 1,
wobei das OSC-Material mit einem hohen spezifischen Oberflächenbereich und das OSC-Material mit einem mittleren spezifischen Oberflächenbereich jeweils unabhängig voneinander ein Verbundwerkstoffoxid auf Aluminiumoxid-Ceroxid-Zirconiumoxid-Basis oder ein Verbundwerkstoffoxid auf Ceroxid-Zirconiumoxid-Basis enthält und das OSC-Material mit einem niedrigen spezifischen Oberflächenbereich ein Verbundwerkstoffoxid auf Ceroxid-Zirconiumoxid-Basis enthält.

**3.** Abgasreinigungskatalysator nach Anspruch 2,
wobei das OSC-Material mit einem niedrigen spezifischen Oberflächenbereich ein Verbundwerkstoffoxid auf Ceroxid-Zirconiumdioxid-Basis mit einer Pyrochlorstruktur enthält.

**4.** Abgasreinigungskatalysator nach einem der Ansprüche 1-3,
wobei die zweite katalytische Beschichtungsschicht (5) eine stromaufwärtige Beschichtungsschicht (2), die aus dem Endabschnitt auf der stromaufwärtigen Seite in Bezug auf die Abgasströmungsrichtung in dem Abgasreinigungskatalysator ausgebildet ist, und eine stromabwärtige Beschichtungsschicht (3) aufweist, die von einem Endabschnitt auf einer stromabwärtigen Seite in Bezug auf die Abgasströmungsrichtung in dem Abgasreinigungskatalysator ausgebildet ist.

**5.** Abgasreinigungskatalysator nach Anspruch 4,
wobei die erste katalytische Beschichtungsschicht (4) eine Breite von 20 % bis 50 % einer Gesamtlänge des Substrats (1) in dem Abgasreinigungskatalysator aufweist, die stromaufwärtige Beschichtungsschicht (2) eine Breite von 30 % bis 70 % der Gesamtlänge des Substrats (1) in dem Abgasreinigungskatalysator aufweist, und die stromabwärtige Beschichtungsschicht (3) eine Breite von 30 % bis 70 % der Gesamtlänge des Substrats (1) in dem Abgasreinigungskatalysator aufweist.

**6.** Abgasreinigungskatalysator nach Anspruch 4,
wobei die erste katalytische Beschichtungsschicht (4) auf der stromaufwärtigen Beschichtungsschicht (2) angeordnet ist.

**7.** Abgasreinigungskatalysator nach Anspruch 4,
wobei die erste katalytische Beschichtungsschicht (4) unter der stromaufwärtigen Beschichtungsschicht (2) angeordnet ist.

**8.** Abgasreinigungskatalysator nach Anspruch 4,

wobei die stromaufwärtige Beschichtungsschicht (2) das OSC-Material mit einem hohen spezifischen Oberflächenbereich und das OSC-Material mit einem niedrigen spezifischen Oberflächenbereich beinhaltet und die stromabwärtige Beschichtungsschicht (3) das OSC-Material mit einem mittleren spezifischen Oberflächenbereich beinhaltet und das OSC-Material mit einem niedrigen spezifischen Oberflächenbereich beinhaltet.

9. Abgasreinigungskatalysator nach Anspruch 8,

wobei das OSC-Material mit hohem spezifischen Oberflächenbereich Ceroxid in einer Menge von 10 Gew.-% bis 40 Gew.-%, bezogen auf das Gesamtgewicht des Ceroxids in der stromaufwärtigen Beschichtungsschicht und der stromabwärtigen Beschichtungsschicht (3) als die zweite katalytische Beschichtungsschicht (5) aufweist,

wobei das OSC-Material mit einem mittleren spezifischen Oberflächenbereich Ceroxid in einer Menge von 10 Gew.-% bis 40 Gew.-% bezogen auf das Gesamtgewicht von Ceroxid in der stromaufwärtigen Beschichtungsschicht (2) und der stromabwärtigen Beschichtungsschicht (3) als die katalytische Beschichtungsschicht (5) aufweist,

wobei das OSC-Material mit einem hohen spezifischen Oberflächenbereich und das OSC-Material mit einem mittleren spezifischen Oberflächenbereich Ceroxid in einer Menge von 60 Gew.-% oder weniger bezogen auf das Gesamtgewicht von Ceroxid in der stromaufwärtigen Beschichtungsschicht (2) und der stromabwärtigen Beschichtungsschicht (3) als die katalytische Beschichtungsschicht (5) aufweisen,

wobei das OSC-Material mit einem niedrigeren spezifischen Oberflächenbereich Ceroxid in einer Menge von 40 Gew.-% bis 80 Gew.-% bezogen auf das Gesamtgewicht von Ceroxid in der stromaufwärtigen Beschichtungsschicht (2) und der stromabwärtigen Beschichtungsschicht (3) als die katalytische Beschichtungsschicht (5) aufweist,

wobei die Summe aller Mengen an Ceroxid in dem OSC-Material mit einem hohen spezifischen Oberflächenbereich, dem OSC-Material mit einem mittleren spezifischen Oberflächenbereich und dem OSC-Material mit niedrigen spezifischen Oberflächenbereich 100 Gew.-% beträgt.

10. Abgasreinigungskatalysator nach Anspruch 4,
wobei die erste katalytische Beschichtungsschicht (4) Pd als ein Katalysatormetall beinhaltet.

11. Abgasreinigungskatalysator nach Anspruch 4,
wobei der Abgasreinigungskatalysator für die Verwendung als S/C (Startkatalysator) in einem Zwei-Katalysator-System dient.

12. Abgasreinigungskatalysator nach einem der Ansprüche 1-3,
wobei die zweite katalytische Beschichtungsschicht (5) von einem Endabschnitt auf einer stromabwärtigen Seite in Bezug auf die Abgasströmungsrichtung in dem Abgasreinigungskatalysator ausgebildet ist.

13. Abgasreinigungskatalysator nach Anspruch 12,
wobei die erste katalytische Beschichtungsschicht (4) eine Breite von 15 % bis 50 % einer Gesamtlänge des Substrats in dem Abgasreinigungskatalysator aufweist und die zweite katalytische Beschichtungsschicht (5) eine Breite von 65 % bis 95 % der Gesamtlänge des Substrats in dem Abgasreinigungskatalysator aufweist.

14. Abgasreinigungskatalysator nach Anspruch 12,
wobei die erste katalytische Beschichtungsschicht (4) Pt als ein Katalysatormetall enthält.

15. Abgasreinigungskatalysator nach Anspruch 12,
wobei der Abgasreinigungskatalysator für die Verwendung als UF/C (Unterbodenkatalysator) in einem Zwei-Katalysator-System dient.

**Revendications**

1. Catalyseur de purification de gaz d'échappement comprenant :

un substrat (1) ; et
une couche de revêtement de catalyseur appliquée sur le substrat (1),
dans lequel la couche de revêtement de catalyseur comprend une première couche de revêtement de catalyseur (4) contenant Pd et/ou Pt comme métal catalyseur et une deuxième couche de revêtement de catalyseur (5) contenant Rh comme métal catalyseur,

dans lequel la première couche de revêtement de catalyseur (4) est formée à partir d'une partie terminale dans un côté amont par rapport à une direction d'écoulement de gaz d'échappement dans le catalyseur de purification de gaz d'échappement, et

dans lequel la deuxième couche de revêtement de catalyseur (5) comprend un matériau OSC à surface spécifique élevée ayant une surface spécifique supérieure à 40 $m^2/g$, un matériau OSC à surface spécifique moyenne ayant une surface spécifique 4 $m^2/g$ à 40 $m^2/g$, et un matériau OSC à faible surface spécifique ayant une surface spécifique inférieure à 4 $m^2/g$.

2. Catalyseur de purification de gaz d'échappement selon la revendication 1,
dans lequel chacun du matériau OSC à surface spécifique élevée et du matériau OSC à surface spécifique moyenne contient indépendamment un oxyde composite à base d'alumine, d'oxyde de cérium et de zircone ou un oxyde composite à base d'oxyde de cérium et de zircone, et le matériau OSC à faible surface spécifique contient un oxyde composite à base d'oxyde de cérium et de zircone.

3. Catalyseur de purification de gaz d'échappement selon la revendication 2,
dans lequel le matériau OSC à faible surface spécifique contient un oxyde composite à base d'oxyde de cérium et de zircone ayant une structure pyrochlore.

4. Catalyseur de purification de gaz d'échappement selon l'une quelconque des revendications 1 à 3,
dans lequel la deuxième couche de revêtement de catalyseur (5) a une couche de revêtement amont (2) formée à partir de la partie terminale dans le côté amont par rapport à la direction d'écoulement de gaz d'échappement dans le catalyseur de purification de gaz d'échappement et une couche de revêtement aval (3) formée à partir d'une partie terminale dans un côté aval par rapport à la direction d'écoulement de gaz d'échappement dans le catalyseur de purification de gaz d'échappement.

5. Catalyseur de purification de gaz d'échappement selon la revendication 4,
dans lequel la première couche de revêtement de catalyseur (4) a une largeur de 20 % à 50 % d'une longueur totale du substrat (1) dans le catalyseur de purification de gaz d'échappement, la couche de revêtement amont (2) a une largeur de 30 % à 70 % de la longueur totale du substrat (1) dans le catalyseur de purification de gaz d'échappement, et la couche de revêtement aval (3) a une largeur de 30 % à 70 % de la longueur totale du substrat (1) dans le catalyseur d'épuration de gaz d'échappement.

6. Catalyseur de purification de gaz d'échappement selon la revendication 4,
dans lequel la première couche de revêtement de catalyseur (4) est disposée sur la couche de revêtement amont (2).

7. Catalyseur de purification de gaz d'échappement selon la revendication 4,
dans lequel la première couche de revêtement de catalyseur (4) est disposée sous la couche de revêtement amont (2).

8. Catalyseur de purification de gaz d'échappement selon la revendication 4,
dans lequel la couche de revêtement amont (2) comprend le matériau OSC à surface spécifique élevée et le matériau OSC à faible surface spécifique, et la couche de revêtement aval (3) comprend le matériau OSC à surface spécifique moyenne et le matériau OSC à faible surface spécifique.

9. Catalyseur de purification de gaz d'échappement selon la revendication 8,

dans lequel le matériau OSC à surface spécifique élevée a de l'oxyde de cérium en une quantité de 10 % en poids à 40 % en poids par rapport à un poids total d'oxyde de cérium dans la couche de revêtement amont et la couche de revêtement aval (3) comme deuxième couche de revêtement de catalyseur (5),

dans lequel le matériau OSC à surface spécifique moyenne a de l'oxyde de cérium en une quantité de 10 % en poids à 40 % en poids par rapport au poids total d'oxyde de cérium dans la couche de revêtement amont (2) et la couche de revêtement aval (3) comme deuxième couche de revêtement de catalyseur (5),

dans lequel le matériau OSC à surface spécifique élevée et le matériau OSC à surface spécifique moyenne ont de l'oxyde de cérium en une quantité de 60 % en poids ou moins par rapport au poids total d'oxyde de cérium dans la couche de revêtement amont (2) et la couche de revêtement aval (3) comme deuxième couche de revêtement de catalyseur (5),

dans lequel le matériau OSC à faible surface spécifique a de l'oxyde de cérium en une quantité de 40 % en poids à 80 % en poids par rapport au poids total d'oxyde de cérium dans la couche de revêtement amont (2) et la couche de revêtement aval (3) comme deuxième couche de revêtement de catalyseur (5), et

dans lequel une somme de toutes les quantités d'oxyde de cérium dans le matériau OSC à surface spécifique élevée, le matériau OSC à surface spécifique moyenne, et le matériau OSC à faible surface spécifique atteint 100 % en poids.

10. Catalyseur de purification de gaz d'échappement selon la revendication 4,
dans lequel la première couche de revêtement de catalyseur (4) comprend Pd comme métal catalyseur.

11. Catalyseur de purification de gaz d'échappement selon la revendication 4,
dans lequel le catalyseur de purification de gaz d'échappement est destiné à être utilisé comme S/C (catalyseur de démarrage) dans un système à deux catalyseurs.

12. Catalyseur de purification de gaz d'échappement selon l'une quelconque des revendications 1 à 3,
dans lequel la deuxième couche de revêtement de catalyseur (5) est formée à partir d'une partie terminale dans un côté aval par rapport à la direction d'écoulement de gaz d'échappement dans le catalyseur de purification de gaz d'échappement.

13. Catalyseur de purification de gaz d'échappement selon la revendication 12,
dans lequel la première couche de revêtement de catalyseur (4) a une largeur de 15 % à 50 % d'une longueur totale du substrat dans le catalyseur de purification de gaz d'échappement, et la deuxième couche de revêtement de catalyseur (5) a une largeur de 65 % à 95 % de la longueur totale du substrat dans le catalyseur de purification de gaz d'échappement.

14. Catalyseur de purification de gaz d'échappement selon la revendication 12,
dans lequel la première couche de revêtement de catalyseur (4) contient Pt comme métal catalyseur.

15. Catalyseur de purification de gaz d'échappement selon la revendication 12,
dans lequel le catalyseur de purification de gaz d'échappement est destiné à être utilisé comme UF/C (catalyseur sous plancher) dans un système à deux catalyseurs.

# Fig. 1

Fig. 2

Fig. 3

Fig. 4

Fig. 5

Fig. 6

# Fig. 7

Fig. 8

# Fig. 9

# Fig. 10

# Fig. 11

# Fig. 12

Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016175053 A
- JP 2022007587 A
- US 2012021899 A1
- JP H10202102 A
- JP 2001232199 A
- JP 2012187518 A
- JP 2011219329 A
- JP 2018038999 A